# EUROPEAN PATENT APPLICATION

(11) **EP 3 569 067 A2**
(43) Date of publication of application: **20.11.2019**
(21) Application number: 19173206.4
(22) Date of filing: 26.06.2015
(51) Int. Cl.: A01N 37/42, A01N 43/50, A01N 47/36, A01P 13/00

(54) **SEED TREATMENT WITH ACETOLACTATE SYNTHASE (ALS) INHIBITORS**

(30) Priority: 26.06.2014 US 201462017273 P; 21.07.2014 EP 14177820
(62) Divisional of application: 15731603.5
(71) Applicant: BASF Agrochemical Products B.V., 6835 Arnhem (NL)
(72) Inventor: PFENNING, Matthias, 67365 Schwegenheim (DE)
(74) Representative: Vos, Derk

(57) **Abstract**

The invention relates to methods for controlling parasitic weeds of host plants, comprising the treatment of seed with a composition comprising at least one acetolactate synthase (ALS) inhibitor. The invention also relates to seed from host plants treated with at least one ALS inhibitor.

## Description

The invention relates to methods for controlling parasitic weeds of host plants, comprising the treatment of seed with a composition comprising at least one acetolactate synthase (ALS) inhibitor. The invention also relates to seed from host plants treated with at least one ALS inhibitor.

### Background of the Invention

Parasitic weeds derive some or all of their sustenance from another plant by penetrating the host's tissue and drawing nutrients from the host plant (W. Koch, M. Kunisch, PLITS 1989/7 (2), Principles of Weed Management, 22-26). This occurs either through the stem, e.g. in Cuscuta spp., or from the root tissue, e.g. Striga spp. (witchweeds) and Orobanche spp. (broomrape). Plants parasitizing on roots cause significant damage in crops before emergence and thus lead to high economical losses. Therefore, handpulling or mechanical weeding may prevent the parasite from seed setting. However, these measures come too late to prevent crop losses. The longevity of the seeds of parasitic species is relatively high. In addition, crop rotation or fallow is often not practical since intervals between the cultivation of susceptible crops have to be 5 to 10 years depending on the specific system. Conferring resistance against parasitic weeds on crop plants through selection or genetic modification is only partly successful as parasitic weeds are able to adopt to such changes quickly (Honiges, A., Wegmann, K. and Ardelean, A. HELIA, 31 , Nr. 49, p.p. 1 -12, (2008)).

Seed treatment is a process of applying active ingredients to seeds in order to support the germination and/or the growth of a large variety of crops.

Being an alternative to traditional broadcast spraying of pesticides, seed treatment compositions must fulfill a number of special requirements which include their applicability to seeds in commercial equipment, the adhesion of the active ingredients to the treated seeds, and good flowability of the treated seeds. Of course, the treated seeds must still be capable of germination.

Acetolactate synthase (ALS), also known as acetohydroxy acid synthase (AHAS), is an enzyme found in plants and micro-organisms. ALS catalyzes the first step in the synthesis of branched-chain amino acids such as valine, leucine, isoleucine. The enzyme typically comprises a large subunit (AHASL) and a small subunit. Further, at least three isozymes, namely AHAS1, AHAS2 and AHAS3, are known.

ALS inhibitors are herbicidally active compounds which inhibit the branched chain amino acid biosynthesis. They belong to group B of the HRAC classification system.

There are only few selective herbicides that control root parasitic weeds while they are still underground. In order to prevent damage to the host plant, a systemic herbicide that can translocate within the host plant must be applied in concentrations which are non-toxic to the host. For this reason, there is a strong need in the agrochemical industry to provide new methods and chemical compositions for the efficient control of root parasitic weeds like, for example, Orobanche spp. and Striga spp..

It is an object of the present invention to provide new methods for parasitic weed control. It is another objective to provide seed that will be less affected by parasitic weed in the field.

### Summary of the Invention

The object was solved by a method for controlling parisitc weeds of host plants comprising the step of treating the seed of said host plants with a composition comprising an acetolactate synthase (ALS) inhibitor or an agriculturally acceptable salt or derivative thereof.

Further, the method according to the present invention may also comprise that the step of treating the seed is followed by a treatment of the emerged host plants with a composition comprising an ALS inhibitor or an agriculturally acceptable salt or derivative thereof.

The object was also solved by providing seed from host plants treated with at least one ALS inhibitor or an agriculturally acceptable salt or derivative thereof.

### Detailed Description

The present invention relates to a method for controlling parisitc weeds of host plants comprising the step of treating the seed of said host plants with a composition comprising an acetolactate synthase (ALS) inhibitor or an agriculturally acceptable salt or derivative thereof. The seed treatment may comprise the steps of dusting, slurrying, soaking, coating or pelleting the seed. Further, commonly known methods of seed treatment according to the present invention are described, for example in WO 2010/107312 A1 and "Applicator Training Manual for: SEED TREATMENT PEST CONTROL; Dennis M TeKrony, University of Kentucky", 1976 ERIC clearinghouse.

In a preferred embodiment, the ALS inhibitor or an agriculturally acceptable salt or derivative thereof comprises imidazolinones, sulfonylureas, triazolopyrimidines, pyrimidinyl oxybenzoates, pyrimidinylbenzoates and sulfonylamino carbonyl triazolinones or any mixture of the foregoing.

Non-limiting preferred examples of ALS inhibitors include sulfonylureas such as amidosulfuron, azimsulfuron, bensulfuron, bensulfuron-methyl, chlorimuron, chlorimuron-ethyl, chlorsulfuron, cinosulfuron, cyclosulfamuron, ethametsulfuron, ethametsulfuron-methyl, ethoxysulfuron, flazasulfuron, flucetosulfuron, flupyrsulfuron, flupyrsulfuron-methyl-sodium, foramsulfuron, halosulfuron, halosulfuron-methyl, imazosulfuron, iodosulfuron, iodosulfuron-methyl-sodium, iofensulfuron, iofensulfuron-sodium, mesosulfuron, metazosulfuron, metsulfuron, metsulfuron-methyl, nicosulfuron, orthosulfamuron, oxasulfuron, primisulfuron, primisulfuron-methyl, propyrisulfuron, prosulfuron, pyrazosulfuron, pyrazosulfuron-ethyl, rimsulfuron, sulfometuron, sulfometuron-methyl, sulfosulfuron, thifensulfuron, thifensulfuron-methyl, triasulfuron, tribenuron, tribenuron-methyl, trifloxysulfuron, triflusulfuron, triflusulfuron-methyl and tritosulfuron;
imidazolinones such as imazamethabenz, imazamethabenz-methyl, imazamox, imazapic, imazapyr, imazaquin and imazethapyr;
triazolopyrimidine herbicides and sulfonanilides such as cloransulam, cloransulam-methyl, diclosulam, flumetsulam, florasulam, metosulam, penoxsulam, pyrimisulfan and pyroxsulam and triafamone;
pyrimidinylbenzoates such as bispyribac, bispyribac-sodium, pyribenzoxim, pyriftalid, pyriminobac, pyriminobac-methyl, pyrithiobac, pyrithiobac-sodium, 4-[[[2-[(4,6-dimethoxy-2-pyrimidinyl)oxy]phenyl]methyl]amino]-benzoic acid-1-methyhethyl ester (CAS 420138-41-6), 4-[[[2-[(4,6-dimethoxy-2-pyrimidinyl)oxy]phenyl]-,methyl]amino]-benzoic acid propyl ester (CAS 420138-40-5), N-(4-bromophenyl)-2-[(4,6-dimethoxy-2-pyrimidinyl)oxy]benzenemethanamine (CAS 420138-01-8);
pyrimidinyl oxybenzoates such as bispyribac and pyriminobac;
sulfonylaminocarbonyl-triazolinone herbicides such as flucarbazone, flucarbazone-sodium, propoxycarbazone, propoxycarbazone-sodium, thiencarbazone and thiencarbazone-methyl; or any mixture of the foregoing.

In a preferred embodiment, the ALS inhibitor is selected from the group consisting of imazethapyr, imazaquin, imazamethabenz, imazamox, imazapic, imazapyr and any mixture of the foregoing.

In a more preferred embodiment, the ALS inhibitor is selected from the group consisting of imazamox, imazethapyr, imazaquin, imazamethabenz, imazapic, imazapyr and any mixture of the foregoing. Preferably, the ALS inhibitor is selected from the group consisting of imazethapyr, imazaquin, imazamethabenz, and combinations thereof.

In an even more preferred embodiment, the ALS inhibitor is imazamox.

In an equally preferred embodiment, the ALS inhibitor is imazapic.

In another preferred embodiment, the ALS inhibitor is imazethapyr.

In another preferred embodiment, the ALS inhibitor is imazaquin.

In another preferred embodiment, the ALS inhibitor is imazamethabenz.

In another equally preferred embodiment, the ALS inhibitor is imazapyr.

In yet another equally preferred embodiment, the ALS inhibitor is tribenuron.

In a preferrred embodiment, the parasitic weed comprises weed from the genus Orobanche, from the genus Conopholis, from the genus Striga, or from the genus Cuscuta. Non-limiting examples of weed from the genus Orobanche include Orobanche aegyptiaca pers., O. ramosa L., O. mino Sm., O. crenata Forsk, O. cumana Wallr. and O. cernua Loefl. These examplatory parasitic weeds are known to afflict plants such as Apiaceae, Asteraceae, Brassicaceae, Cannabiceae, Chenopodiaceae, Cucurbitaceae, Fabaceae, Liliaceae, Malvaceae and Solanaceae.

Non-limiting examples of the genus Conopholis include Conopholis alpina and Conopholis Americana.

Non-limiting examples of weed from the genus Striga include Striga hermonthica and Striga asiatica. Affected host plants are for example maize, millet, rice, sorghum and sugarcane.

Non-limiting examples of the genus Cuscuta include Cuscuta approximata, Cuscuta californica, Cuscuta epithymum, Cuscuta europaea, Cuscuta pentagona and Cuscuta salina. These examplatory parasitic weeds are known to afflict plants such as Alfalfa, clover, tomatoes and potatoes, onion (*Allium cepa L.*) and chilli (*Capsicum annum L*)*.* and beets (*Beta vulgaris*)*.*

In another preferred embodiment, the host plants comprise plants of the family of Asteracea, such as Helianthus annuus; Brassicaceae such as B. napus, B. rapa, B. juncea; Poaceae such as Zea mays or Oryza sativa; Leguminosae (Fabaceae) such as Trifolium spp, Glycine max, Pisa spp, Vicia spp or Medicago spp; Solanaceae such as *Solanum tuberosum, Solanum lycopersicum Solanum meiongena, Nicotiana tabacum.*

In one preferred embodiment, the host plants may comprise plants such as *Helianthus annuus Brassica napus, Brassica rapa, Brassicaljuncea, Glycine max* (soybean), *Sorghum, Triticum spp* (wheat), *Lens culinaris* (lentil), *Hordeum vulgare* (Barley), Dry Bean (phaseolus spp), *Vigna unguiculata (cowpea)* or combinations thereof.

In another embodiment, the host plant contains at least one herbicide tolerance trait, wherein the AHASL (acetohydroxyacid synthase large subunit) protein comprises at least one amino acid substitution. However, the AHASL substitutiont may also result in different trait, such as a trait of an increased grain yield or a more favourable seed protein profile. In another preferred embodiment, the herbicide tolerance trait is in combination with one or more of said different traits.

In yet another preferred embodiment, the host plant may have a herbicide tolerance trait, preferably providing a tolerance towards at least one ALS inhibitor. The herbicide tolerant plant may either be homozygous or heterozygous for the herbicide tolerance trait. Preferably, one or more amino acid substitution(s) in one trait in a heterozygous state may be sufficient to produce a level of herbicide tolerance that is sufficient for many crop productions systems. However, for particular herbicide applications, and particularly in cases with crop plants having multiple AHASL such as wheat, but also particular applications for other plants such as *Helianthus annuus* or *Brassica napus,* combinations of substitutions and/or traits are desired to achieve an increased level of resistance to herbicides.

In a preferred embodiment, the host plants may be herbicide tolerant *Helianthus annuus.* Preferably, the host plant provides an herbicide tolerance trait (1) having an AHASL with an A122(*At*)T substitution, or (2) an AHASL variant thereof that contains both the A122(*At*)T substitution and a second substitution that can be one or more of P197(*At*)Q, P197(*At*)S, P197(*At*)L, T203(*At*)I, T203(*At*)X, A205(*At*)D, A205(*At*)V, W574(*At*)L, A653(A*t*)N, A653(*At*)T, A653(*At*)F, or A653(*At*)V; wherein X may be selected as any natural amino acid.

In another preferred embodiment, the host plant *Helianthus annuus* provides two herbicide tolerance traits, both the trait with the AHASL A122(At)T substitution and a second trait, having an AHASL with an A205(At)V substitution, an AHASL with a P197(*At*)S substitution, an AHASL with a P197(At)L substitution or an AHASL with a W574(*At*)L substitution.

In another preferred embodiment, the host plant *Helianthus annuus* provides a herbicide tolerance trait having one A205(*At*)V substitution. For example, the host plant may be Helianthus annuus Imisun sunflowers that are known as tolerant towards imidazolinones.

In yet another embodiment, the host plant *Helianthus annuus* provides a herbicide tolerance trait having one P197(*At*)L substitution. For example, the host plant may be the ExpressSun® sunflowers which are tolerant to herbicides such as tribenuron, metsulfuron and/or ethametsulfuron-methyl.

In yet another embodiment, the host plant *Helianthus annuus* provides a herbicide tolerance trait having one P197(*At*)S substitution. For example, the host plant may provide the SURES trait sun flowers which are tolerant to herbicides such as tribenuron, trebenuron-methyl and ethametsulfuron-methyl.

In another particular embodiment, the host plant *Helianthus annuus* provides a herbicide tolerance trait with an AHASL having one W574(*At*)L substitution . For example, the host plant may provide the AIR trait, giving a broad range of tolerance to sulfonylurea, imidazolinones, triazolopyrimidine and pyrimidyloxybenzoates.

In yet another preferred embodiment, the host plants may be *Brassica.* Preferably, the *Brassica* contain a herbicide tolerance trait with an AHASL having two substitutions, an A122(*At*)T substitution and an S653(*At*)N substitution.

In another embodiment, the *Brassica* contain a herbicide tolerance trait with an AHASL having two substitutions, an W574(*At*)L substitution and an S653(*At*)N substitution.

In yet another embodiment, the host plant *Brassica* has a herbicide tolerance trait with an AHASL having one A122(*At*)T substitution.

In yet another embodiment, both a herbicide tolerance trait with an AHASL having two substitutions of an A122(*At*)T substitution and an S653(*At*)N substitution and one or two additional herbicide tolerance trait(s) that each have AHASL substitution(s) at at least one of the positions A122(*At*), P197(*At*), R199(*At*), T203(*At*), A205(*At*), W574(*At*), S653(*At*), or G654(*At*) are present in the *Brassica* host plant.

In yet another embodiment, a herbicide tolerance trait with an AHASL having two substitutions of W574(*At*)L substitution and an S653(*At*)N substitution and one or two additional herbicide tolerance trait(s) that each have substitution(s) at at least one of the positions A122(*At*), P197(*At*), R199(*At*), T203(*At*), A205(*At*), W574(*At*), S653(*At*), or G654(*At*) are present in the *Brassica* host plant.

In another preferred embodiment, the host plant Brassica comprises a herbicide tolerance trait with an AHASL having one W574(*At*)L substitution.

In another preferred embodiment, the host plant Brassica comprises a herbicide tolerance trait with an AHASL having one A205(*At*)V substitution.

In another embodiment, the host plant *Brassica* has a herbicide tolerance trait having an S653(*At*)N substitution of the AHAS1 enzyme and/or a W574(*At*)L substitution of the AHAS3 enzyme. Example host plants include, but are not limited to, the oil seed rape of Clearfiled OSR® (BASF) which is, for example, tolerant towards imidazolinone herbicide.

In another preferred embodiment, the host plant containing at least one herbicide tolerance trait as described in the previous embodiments is *Brassica napus, Brassica juncea* or *Brassica rapa.*

In a preferred embodiment, the host plant *Oryza sativa* comprises a herbicide tolerance trait having an AHASL with at least one substitution selected from the group consisting of A205(*At*)V, S653(*At*)N, G654(*At*)E, A122(*At*)T, P197(*At*)X wherein X may be selected as any natural amino acid, and W574(*At*)L.

In yet another preferred embodiment, the host plant *Oryza sativa* comprises a herbicide tolerance trait (1) with an AHASL A205(*At*)V substitution, an S653(*At*)N substitution, a G654(*At*)E substitution, a A122(*At*)T substitution or a P197(*At*)X substitution or a W574(At)L substitution, or (2) an AHASL variant thereof that contains one of the substitutions from (1) and a second substitution that can be one or more of P197(*At*)Q, P197(*At*)X, T203(*At*)1, T203(*At*)X, A205(*At*)D, A205(*At*)V, W574(*At*)L, A653(A*t*)N, A653(*At*)T, A653(*At*)F, or A653(*At*)V, S653(*At*)N, G654(At)E, A122(*At*)T, W574(*At*)L wherein X may be selected as any natural amino acid. Preferably, an amino acid may only be selected to be substituted once. For example, if A205(*At*)V is selected as the substitution under (1) then A205(*At*)D must not be selected as the second substitution under (2).

In a preferred embodiment, the host plant *Zea mays* contains a herbicide tolerance trait having an AHASL with at least one substitution selected from the group consisting of A205(*At*)V, S653(*At*)N, A122(*At*)T, P197(*At*)X wherein X may be selected as any natural amino acid, and W574(*At*)L.

In yet another preferred embodiment, the host plant *Zea mays* contains a herbicide tolerance trait of (1) with an AHASL A205(*At*)V substitution, an S653(*At*)N substitution, an A122(*At*)T substitution, a P197(*At*)X substitution or a W574(*At*)L substitution, or (2) an AHASL variant thereof that contains one of the substitutions from (1) and a second substitution that can be one or more of P197(*At*)Q, P197(*At*)X, T203(*At*)I, T203(*At*)X, A205(*At*)D, A205(*At*)V, W574(*At*)L, A653(A*t*)N, A653(*At*)T, A653(*At*)F, or A653(*At*)V, S653(*At*)N, A122(*At*)T, W574(*At*)L wherein X may be selected as any natural amino acid. Preferably, an amino acid may only be selected to be substituted once. For example, if A205(*At*)V is selected as the substitution under (1) then A205(*At*)D must not be selected as the second substitution under (2).

In another preferred embodiment, the host plant *Glycine max* (soybean) contains a herbicide tolerance trait with an AHASL having an S653N substitution or an AHASL having both a P197A (or P197S) and a W574L substitution. In another embodiment, the *Glycine max* contains a herbicide tolerance trait having an AHASL with both, an A122T and an S653N substitution.

In yet another preferred embodiment, the host plant *Sorghum* contains a herbicide tolerance trait having an AHASL with an A122T or a W574L substitution.

In another preferred embodiment, the host plant *Triticum spp.* contains a herbicide tolerance trait having an AHASL having an A122T or an S653N substitution. In another embodiment, the host plant *Triticum spp.* contains two herbicide tolerance traits, one AHASL with an A122T substitution and one AHASL with an S653N substitution.

In another preferred embodiment, the host plant *Triticum spp.* contains two herbicide tolerance traits, both having an AHASL with an S653N substitution, respectively.

In another preferred embodiment, the host plant *lens culinaris* contains a herbicide tolerance trait having one AHASL with an A205 V substitution.

In yet another preferred embodiment, the host plant *Hordeum vulgare* contains a herbicide tolerance trait having one AHASL with an S653N substitution.

In one preferred embodiment, the host plant *Phaseolus spp.* contains a herbicide tolerance trait of an AHASL having an S653 N substitution.

In yet another preferred embodiment, the host plant *Vigna unguiculata* contains a herbicide tolerance trait of an AHASL having an S653N substitution.

In a particularly preferred embodiment, the method of the present invention further comprises that the step of treating the seed with an ALS inhibitor or an agriculturally acceptable salt or derivative thereof as described above is followed by a treatment of the emerged host plants with a composition comprising an ALS inhibitor or an agriculturally acceptable salt or derivative thereof wherein the ALS inhibitor is selected from the group consisting of imidazolinones, sulfonylureas, triazolopyrimidines, pyrimidinyl oxybenzoates, pyrimidinylbenzoates, and sulfonylamino carbonyl triazolinones and any mixture of the foregoing. The ALS inhibitor may preferably be applied to the emerged host plant in a spray application. Non-limiting preferred examples of ALS inhibitors include sulfonylureas such as amidosulfuron, azimsulfuron, bensulfuron, bensulfuron-methyl, chlorimuron, chlorimuron-ethyl, chlorsulfuron, cinosulfuron, cyclosulfamuron, ethametsulfuron, ethametsulfuron-methyl, ethoxysulfuron, flazasulfuron, flucetosulfuron, flupyrsulfuron, flupyrsulfuron-methyl-sodium, foramsulfuron, halosulfuron, halosulfuron-methyl, imazosulfuron, iodosulfuron, iodosulfuron-methyl-sodium, iofensulfuron, iofensulfuron-sodium, mesosulfuron, metazosulfuron, metsulfuron, metsulfuron-methyl, nicosulfuron, orthosulfamuron, oxasulfuron, primisulfuron, primisulfuron-methyl, propyrisulfuron, prosulfuron, pyrazosulfuron, pyrazosulfuron-ethyl, rimsulfuron, sulfometuron, sulfometuron-methyl, sulfosulfuron, thifensulfuron, thifensulfuron-methyl, triasulfuron, tribenuron, tribenuron-methyl, trifloxysulfuron, triflusulfuron, triflusulfuron-methyl and tritosulfuron;
imidazolinones such as imazamethabenz, imazamethabenz-methyl, imazamox, imazapic, imazapyr, imazaquin and imazethapyr;
triazolopyrimidine herbicides and sulfonanilides such as cloransulam, cloransulam-methyl, diclosulam, flumetsulam, florasulam, metosulam, penoxsulam, pyrimisulfan and pyroxsulam and triafamone;
pyrimidinylbenzoates such as bispyribac, bispyribac-sodium, pyribenzoxim, pyriftalid, pyriminobac, pyriminobac-methyl, pyrithiobac, pyrithiobac-sodium, 4-[[[2-[(4,6-dimethoxy-2-pyrimidinyl)oxy]phenyl]methyl]amino]-benzoic acid-1-methyl¬ethyl ester (CAS 420138-41-6), 4-[[[2-[(4,6-dimethoxy-2-pyrimidinyl)oxy]phenyl]¬methyl]amino]-benzoic acid propyl ester (CAS 420138-40-5), N-(4-bromophenyl)-2-[(4,6-dimethoxy-2-pyrimidinyl)oxy]benzenemethanamine (CAS 420138-01-8);
pyrimidinyl oxybenzoates such as bispyribac and pyriminobac;
sulfonylaminocarbonyl-triazolinone herbicides such as flucarbazone, flucarbazone-sodium, propoxycarbazone, propoxycarbazone-sodium, thiencarbazone and thiencarbazone-methyl or any mixture of the foregoing. Preferably, the ALS inhibitor is selected from the group consisting of imazamox, imazapic, and imazapyr and any mixture of the foregoing. Even more preferably, the ALS is imazamox. It is equally preferrred that the ALS inhibitor comprises tribenuron-methyl, thifensulfuron-methyl, mesosulfuron, imazasulfuron, foramsulfuron, metsulfuron, ethametsulfuron and any mixture of the foregoing.

In a preferred embodiment, the step of treating the seed with an ALS inhibitor or an agriculturally acceptable salt or derivative thereof as described above is followed by a treatment of the emerged host plants with a composition comprising an imidazolinone. Preferably, the imidazolinone is selected from the group consisting of imazamox, imazapyr, imazethapyr and any mixture of the foregoing. In another preferred embodiment, the imidazolinone is selected from the group consisting of imazamox, imazapyr and combinations thereof.

In a preferred embodiment, the treatment of the emerged host plant may occur as long as the host plant derived from the treated seed has not been harvested.

In an alternative preferred embodiment, the method of the present invention comprises that the step of treating the seed with an ALS inhibitor is followed by the step of a treatment of the emerged host plants with a composition comprising at least one herbicide or an agriculturally acceptable salt or derivative thereof, at least one fungicide or an agriculturally acceptable salt or derivative thereof, at least one insecticide or an agriculturally acceptable salt or derivative thereof, at least one plant growth regulator or an agriculturally acceptable salt or derivative thereof, or any mixture of the foregoing. Preferably, the composition is applied to the emerged host plants in a spray application.

In a preferred embodiment, the seed treatment with an ALS inhibitor is followed by a treatment of the emerged host plant with a fungicide or an agriculturally acceptable salt or derivative thereof. The fungicide may be selected from the group consisting of strobilurin fungicides, for example, azoxystrobin, coumethoxystrobin, coumoxystrobin, dimoxystrobin, enestroburin, fluoxastrobin, kresoxim-methyl, metominostrobin, orysastrobin, picoxystrobin, pyraclostrobin, pyrametostrobin, pyraoxystrobin, pyribencarb, trifloxystrobin, 2-[2-(2,5-dimethylphenoxymethyl)-phenyl]-3-methoxy-acrylic acid methyl ester and 2-(2-(3-(2,6-dichlorophenyl)-1-methyl-allylideneaminooxymethyl)-phenyl)-2-methoxyimino-N-methylacetamide;
or azole fungicides such as tebuconazole, metconazole, prothioconazole, difenoconazole, paclobutrazole, flusilazole, cyproconazole, propiconazole, fluquinazole; or succinate dehydrogenase inhibitors such as boscalid, bixafen, fluopyram, penthiopyrad isopyrazam, fluxapyroxad; or carbendazim, thiophanatemethyl, iprodione, chlorothalonil, mancozeb, procymidone, vinclozolin,famoxadone, triadimenol, fenpropimorph, cymoxanil, prochlorazany mixture of the foregoing.

In another preferred embodiment, the seed treatment with an ALS inhibitor is followed by a treatment of the emerged host plant with an insecticide or an agriculturally acceptable salt or derivative thereof. The insecticide may be selected from the group consisting of Neonicotinoids such as Acetamiprid, Clothianidin, Dinotefuran, Imidacloprid, Nitenpyram, Thiacloprid, Thiamethoxam; or Organophosphates such as Acephate, Azamethiphos, Azinphos-ethyl, Azinphosmethyl, Cadusafos, Chlorethoxyfos, Chlorfenvinphos, Chlormephos, Chlorpyrifos, Chlorpyrifos-methyl, Coumaphos, Cyanophos, Demeton-S-methyl, Diazinon, Dichlorvos/ DDVP, Dicrotophos, Dimethoate, Dimethylvinphos, Disulfoton, EPN, Ethion, Ethoprophos, Famphur, Fenamiphos, Fenitrothion, Fenthion, Fosthiazate, Heptenophos, Imicyafos, Isofenphos, Isopropyl *O*-(methoxyaminothio-phosphoryl) salicylate, Isoxathion, Malathion, Mecarbam, Methamidophos, Methidathion,Mevinphos, Monocrotophos, Naled, Omethoate, Oxydemeton-methyl, Parathion, Parathion-methyl,Phenthoate, Phorate, Phosalone, Phosmet, Phosphamidon, Phoxim, Pirimiphos- methyl, Profenofos, Propetamphos, Prothiofos, Pyraclofos, Pyridaphenthion, Quinalphos, Sulfotep, Tebupirimfos, Temephos, Terbufos, Tetrachlorvinphos, Thiometon, Triazophos, Trichlorfon, Vamidothion; or Pyrethroids / Pyrethrins such as Acrinathrin, Allethrin, d*-cis-trans* Allethrin, d-*trans* Allethrin, Bifenthrin, Bioallethrin, Bioallethrin Scyclopentenyl isomer, Bioresmethrin, Cycloprothrin, Cyfluthrin, *beta*-Cyfluthrin, Cyhalothrin, *lambda-*Cyhalothrin, gamma-Cyhalothrin, Cypermethrin, *alpha*-Cypermethrin, *beta*-Cypermethrin, *theta*cypermethrin, *zeta*-Cypermethrin, Cyphenothrin, (1*R*)*-trans-*isomers], Deltamethrin, Empenthrin (*EZ*)-(1*R*)-isomers], Esfenvalerate, Etofenprox, Fenpropathrin, Fenvalerate, Flucythrinate, Flumethrin, *tau-*Fluvalinate, Halfenprox, Imiprothrin, Kadethrin,Permethrin, Phenothrin [(1*R*)*-trans-*isomer], Prallethrin, Pyrethrins (pyrethrum), Resmethrin, Silafluofen, Tefluthrin, Tetramethrin, Tetram any mixture of the foregoing.

In yet another preferred embodiment, the seed treatment with an ALS inhibitor is followed by a treatment of the emerged host plant with a herbicide or an agriculturally acceptable salt or derivative thereof. The herbicide may be selected from the group consisting of amidosulfuron, azimsulfuron, bensulfuron,
bensulfuron-methyl, chlorimuron, chlorimuron-ethyl, chlorsulfuron, cinosulfuron, cyclosulfamuron, ethametsulfuron, ethametsulfuron-methyl, ethoxysulfuron, flazasulfuron, flucetosulfuron, flupyrsulfuron, flupyrsulfuron-methyl-sodium, foramsulfuron, halosulfuron, halosulfuron-methyl, imazosulfuron, iodosulfuron, iodosulfuron-methyl-sodium, mesosulfuron, metazosulfuron, metsulfuron, metsulfuronmethyl, nicosulfuron, orthosulfamuron, oxasulfuron, primisulfuron, primisulfuronmethyl, propyrisulfuron, prosulfuron, pyrazosulfuron, pyrazosulfuron-ethyl, rimsulfuron, sulfometuron, sulfometuron-methyl, sulfosulfuron, thifensulfuron, thifensulfuron-methyl, triasulfuron, tribenuron, tribenuron-methyl, trifloxysulfuron, triflusulfuron, triflusulfuronmethyl and tritosulfuron; imidazolinones such as imazamethabenz, imazamethabenzmethyl, imazamox, imazapic, imazapyr, imazaquin and imazethapyr; triazolopyrimidine herbicides and sulfonanilides such as cloransulam, cloransulam-methyl, diclosulam, flumetsulam, florasulam, metosulam, penoxsulam, pyrimisulfan and pyroxsulam; pyrimidinylbenzoates such as bispyribac, bispyribac-sodium, pyribenzoxim, pyriftalid, pyriminobac, pyriminobac-methyl, pyrithiobac, pyrithiobac-sodium, 4-[[[2-[(4,6-dimethoxy-2-pyrimidinyl)oxy]phenyl]methyl]amino]-benzoic acid-1-methylethyl ester (CAS 420138-41-6), 4-[[[2-[(4,6-dimethoxy-2-pyrimidinyl)oxy]phenyl]methyl]amino]-benzoic acid propyl ester (CAS 420138-40-5), N-(4-bromophenyl)-2-[(4, 6-dimethoxy-2-pyrimidinyl)oxy]benzenemethanamine (CAS 420138-01-8); sulfonylaminocarbonyltriazolinone herbicides such as flucarbazone, flucarbazone-sodium, propoxycarbazone, propoxycarbazone-sodium, thiencarbazone and thiencarbazone-methyl and triafamone, alachlor, acetochlor, aclonifen, cycloxydim, tepraloxydim, clethodim, fenoxyaprop, propaquizafop, quizalafop, haloxyfop, pendimethalin, clomazone, metazachlor, Metolachlor, quinmerac, dimethenamid, ethametsulfuron, napropamide, pethoxamide, glyphosate, gluphosinate, sulfentrazone, carfentrazone, trifluralin, flurochloridone, oxadiazone, linuron; and any mixture of the foregoing.

In another preferred embodiment, the seed treatment with an ALS inhibitor is followed by a treatment of the emerged host plant with a plant growth regulator or an agriculturally acceptable salt or derivative thereof. The plant growth regulator may be selected from the group consisting of plant growth regulator(s) (PGR) which act as ethylene modulators selected from L-2-amino-4-alkoxy-trans-3-butenoic acid, L-canaline, Co⁺⁺ or Ni⁺⁺ ions in plant-available forms, n-propyl gallate, n-octyl gallate, ndodecyl gallate, putrescine, spermine or spermidine, a -aminoisobutyric acid, Laminocyclopropene-1-carboxylic acid, salicylic acid, acibenzolar-S-methyl, prohexadione, prohexadione-calcium, trinexapac, trinexapac-ethyl, paclobutrazole, metconazole, tebuconazole, uniconazole, 1-methylcyclopropene, 2,5- norbornadiene, 3-amino-1, 2,4-triazole or Ag⁺⁺ ions including their agriculturally acceptable salts or derivatives, chlormequat-chloride and mepiquat-chloride and sulphonyl-amino phenyl-acetamides such as mefluidide; and any mixture of the foregoing.

In a preferred embodiment, the seed treatment with an ALS inhibitor is followed by a treatment of the emerged host plant with a composition comprising at least one herbicide or an agriculturally acceptable salt or derivative thereof and at least one fungicide or an agriculturally acceptable salt or derivative thereof. Preferred examples of herbicides in the composition are cycloxydim, tepraloxydim, clethodim, fenoxyaprop, propaquizafop, quizalafop, haloxyfop, pendimethalin, metazachlor, Metolachlor, quinmerac, dimethenamid, ethametsulfuron, napropamide, pethoxamide, sulfentrazone, carfentrazone, flurochloridone, oxadiazone. Preferred examples of fungicides of the composition are azoxystrobin, dimoxystrobin, fluoxastrobin, kresoxim-methyl, metominostrobin, picoxystrobin, pyraclostrobin, pyraoxystrobin, pyribencarb, trifloxystrobin, tebuconazole, metconazole, prothioconazole, difenoconazole, paclobutrazole, flusilazole, cyproconazole, propiconazole, boscalid, bixafen, carbendazim, thiophanatemethyl, iprodione, chlorothalonil, mancozeb, procymidone, vinclozolin, fenpropimorph, cymoxanil, prochloraz, flyopyram, izoyrazam, floxapyroxad, pentiopyrad; and any mixture of the foregoing.

In a preferred embodiment, the seed treatment with an ALS inhibitor is followed by a treatment of the emerged host plant with a composition comprising at least one herbicide or an agriculturally acceptable salt or derivative thereof and at least one fungicide or an agriculturally acceptable salt or derivative thereof wherein the herbicide is Imazamox, Imazapyr, Imazethapyr, Tribenuron and combination thereof and the fungicide is azoxystobin, pyraclostrobin, metconazole, boscalid, dimoxystrobin; and any mixture of the foregoing.

In another preferred embodiment, the seed treatment with an ALS inhibitor is followed by a treatment of the emerged host plant with a composition comprising at least one insecticide or an agriculturally acceptable salt or derivative thereof and at least one fungicide or an agriculturally acceptable salt or derivative thereof. Preferred insecticides of the composition are alpha-cypermethirn, Chlorpyriphos, Dimethoate or any mixture of the foregoing. Preferred examples of fungicides of the composition are azoxystobin, pyraclostrobin, metconazole, boscalid, dimoxystrobin or any mixture of the foregoing.

In a preferred embodiment, the seed treatment with an ALS inhibitor is followed by a treatment of the emerged host plant with a composition comprising at least one insecticide or an agriculturally acceptable salt or derivative thereof and at least one fungicide or an agriculturally acceptable salt or derivative thereof, wherein the insecticide is alpha-cypermethirn, Chlorpyriphos, Dimethoate or any mixture of the foregoing and the fungicide is azoxystobin, pyraclostrobin, metconazole, boscalid dimoxystrobin or any mixture of the foregoing.

In another preferred embodiment, the seed treatment with an ALS inhibitor is followed by a treatment of the emerged host plant with a composition comprising at least one plant growth regulator or an agriculturally acceptable salt or derivative thereof and at least one fungicide or an agriculturally acceptable salt or derivative thereof. Preferred plant growth regulators of the composition are prohexadione, prohexadione-calcium, trinexapac, trinexapac-ethyl, mepiquat-chloride or any mixture of the foregoing. Preferred examples of fungicides of the composition are azoxystobin, pyraclostrobin, metconazole, boscalid, dimoxystrobin or any mixture of the foregoing.

In a preferred embodiment, the seed treatment with an ALS inhibitor is followed by a treatment of the emerged host plant with a composition comprising at least one plant growth regulator or an agriculturally acceptable salt or derivative thereof and at least one fungicide or an agriculturally acceptable salt or derivative thereof, wherein the plant growth regulator is prohexadione, prohexadione-calcium, trinexapac, trinexapac-ethyl, mepiquat-chloride or any mixture of the foregoing and the fungicide is azoxystobin, pyraclostrobin, metconazole, boscalid, dimoxystrobin or any mixture of the foregoing.

In another preferred embodiment, the seed treatment with an ALS inhibitor is followed by a treatment of the emerged host plant with a composition comprising at least one plant growth regulator or an agriculturally acceptable salt or derivative thereof and at least one insecticide or an agriculturally acceptable salt or derivative thereof. Preferred plant growth regulators of the composition are prohexadione, prohexadione-calcium, trinexapac, trinexapac-ethyl mepiquat-chloride or any mixture of the foregoing. Preferred examples of insecticides of the composition are alpha-cypermethirn, chlorpyriphos, dimethoate, lambda-cyhalothrin or any mixture of the foregoing.

In a preferred embodiment, the seed treatment with an ALS inhibitor is followed by a treatment of the emerged host plant with a composition comprising at least one plant growth regulator or an agriculturally acceptable salt or derivative thereof and at least one insecticide or an agriculturally acceptable salt or derivative thereof, wherein the plant growth regulator is prohexadione, prohexadione-calcium, trinexapac, trinexapac-ethyl, mepiquat-chloride or any mixture of the foregoing and the insecticide is alpha-cypermethirn, chlorpyriphos, dimethoate, lambda-cyhalothrin or any mixture of the foregoing.

In another preferred embodiment, the seed treatment with an ALS inhibitor is followed by a treatment of the emerged host plant with a composition comprising at least one plant growth regulator or an agriculturally acceptable salt or derivative thereof and at least one herbicide or an agriculturally acceptable salt or derivative thereof. Preferred plant growth regulators of the composition are prohexadione, prohexadione-calcium, trinexapac, trinexapac-ethyl, mepiquat-chloride or any mixture of the foregoing. Preferred examples of herbicides of the composition are Imazamox, Imazapyr, Imazethapyr, Tribenuron or any mixture of the foregoing.

In a preferred embodiment, the seed treatment with an ALS inhibitor is followed by a treatment of the emerged host plant with a composition comprising at least one plant growth regulator or an agriculturally acceptable salt or derivative thereof and at least one herbicide or an agriculturally acceptable salt or derivative thereof, wherein the plant growth regulator is prohexadione, prohexadione-calcium, trinexapac, trinexapac-ethyl, mepiquat-chloride or any mixture of the foregoing and the herbicide is Imazamox, Imazapyr, Imazethapyr, Tribenuron or any mixture of the foregoing.

In another preferred embodiment, the seed treatment with an ALS inhibitor is followed by a treatment of the emerged host plant with a composition comprising at least one insecticide or an agriculturally acceptable salt or derivative thereof and at least one herbicide or an agriculturally acceptable salt or derivative thereof. Preferred insecticides of the composition are alpha-cypermethirn, chlorpyriphos, dimethoate, lambda-cyhalothrin or any mixture of the foregoing. Preferred examples of herbicides of the composition are Imazamox, Imazapyr, Imazethapyr, Tribenuron or any mixture of the foregoing.

In a preferred embodiment, the seed treatment with an ALS inhibitor is followed by a treatment of the emerged host plant with a composition comprising at least one insecticide or an agriculturally acceptable salt or derivative thereof and at least one herbicide or an agriculturally acceptable salt or derivative thereof, wherein the insecticide is alpha-cypermethirn, chlorpyriphos, dimethoate, lambda-cyhalothrin or any mixture of the foregoing and the herbicide is Imazamox, Imazapyr, Imazethapyr, Tribenuron or any mixture of the foregoing.

In another preferred embodiment, the seed treatment with an ALS inhibitor is followed by a treatment of the emerged host plant with a composition comprising at least one insecticide or an agriculturally acceptable salt or derivative thereof and at least one herbicide or an agriculturally acceptable salt or derivative thereof and at least one plant growth regulator or an agriculturally acceptable salt or derivative thereof. Preferred insecticides of the composition are alpha-cypermethirn, chlorpyriphos, dimethoate, lambda-cyhalothrin or any mixture of the foregoing. Preferred examples of herbicides of the composition are Imazamox, Imazapyr, Imazethapyr, Tribenuron or a combination thereof. Preferred examples of plant growth regulators of the composition are prohexadione, prohexadione-calcium, trinexapac, trinexapac-ethyl, mepiquat-chloride or any mixture of the foregoing.

In a preferred embodiment, the seed treatment with an ALS inhibitor is followed by a treatment of the emerged host plant with a composition comprising at least one insecticide or an agriculturally acceptable salt or derivative thereof and at least one herbicide or an agriculturally acceptable salt or derivative thereof and at least one plant growth regulator or an agriculturally acceptable salt or derivative thereof, wherein the insecticide is alpha-cypermethirn, chlorpyriphos, dimethoate, lambda-cyhalothrin or any mixture of the foregoing, the plant growth regulator is prohexadione, prohexadione-calcium, trinexapac, trinexapac-ethyl and mepiquat-chloride or any mixture of the foregoing and the herbicide is Imazamox, Imazapyr, Imazethapyr, Tribenuron or any mixture of the foregoing.

In another preferred embodiment, the seed treatment with an ALS inhibitor is followed by a treatment of the emerged host plant with a composition comprising at least one fungicide or an agriculturally acceptable salt or derivative thereof and at least one herbicide or an agriculturally acceptable salt or derivative thereof and at least one plant growth regulator or an agriculturally acceptable salt or derivative thereof. Preferred fungicides of the composition are azoxystobin, pyraclostrobin, metconazole, boscalid, dimoxystrobin or any mixture of the foregoing. Preferred examples of herbicides of the composition are Imazamox, Imazapyr, Imazethapyr, Tribenuron or a combination thereof. Preferred examples of plant growth regulators of the composition are prohexadione, prohexadione-calcium, trinexapac, trinexapac-ethyl and mepiquat-chloride or any mixture of the foregoing.

In a preferred embodiment, the seed treatment with an ALS inhibitor is followed by a treatment of the emerged host plant with a composition comprising at least one fungicide or an agriculturally acceptable salt or derivative thereof and at least one herbicide or an agriculturally acceptable salt or derivative thereof and at least one plant growth regulator or an agriculturally acceptable salt or derivative thereof, wherein the fungicide is azoxystobin, pyraclostrobin, metconazole, boscalid, dimoxystrobin or any mixture of the foregoing, the plant growth regulator is prohexadione, prohexadione-calcium, trinexapac, trinexapac-ethyl and mepiquat-chloride or any mixture of the foregoing and the herbicide is Imazamox, Imazapyr, Imazethapyr, Tribenuron and combinations thereof.

In another preferred embodiment, the seed treatment with an ALS inhibitor is followed by a treatment of the emerged host plant with a composition comprising at least one fungicide or an agriculturally acceptable salt or derivative thereof and at least one insecticide or an agriculturally acceptable salt or derivative thereof and at least one plant growth regulator or an agriculturally acceptable salt or derivative thereof. Preferred fungicides of the composition are azoxystobin, pyraclostrobin, metconazole, boscalid, dimoxystrobin or any mixture of the foregoing. Preferred examples of insecticides of the composition are alpha-cypermethirn, chlorpyriphos, dimethoate, lambda-cyhalothrin or any mixture of the foregoing. Preferred examples of plant growth regulators of the composition are prohexadione, prohexadione-calcium, trinexapac, trinexapac-ethyl and mepiquat-chloride or any mixture of the foregoing.

In a preferred embodiment, the seed treatment with an ALS inhibitor is followed by a treatment of the emerged host plant with a composition comprising at least one fungicide or an agriculturally acceptable salt or derivative thereof and at least one insecticide or an agriculturally acceptable salt or derivative thereof and at least one plant growth regulator or an agriculturally acceptable salt or derivative thereof, wherein the fungicide is azoxystobin, pyraclostrobin, metconazole, boscalid, dimoxystrobin or any mixture of the foregoing, the plant growth regulator is prohexadione, prohexadione-calcium, trinexapac, trinexapac-ethyl and mepiquat-chloride or any mixture of the foregoing and the insecticide is alpha-cypermethirn, chlorpyriphos, dimethoate, lambda-cyhalothrin or any mixture of the foregoing.

In another preferred embodiment, the seed treatment with an ALS inhibitor is followed by a treatment of the emerged host plant with a composition comprising at least one fungicide or an agriculturally acceptable salt or derivative thereof and at least one insecticide or an agriculturally acceptable salt or derivative thereof and at least one herbicide or an agriculturally acceptable salt or derivative thereof. Preferred fungicides of the composition are azoxystobin, pyraclostrobin, metconazole, boscalid, dimoxystrobin or any mixture of the foregoing. Preferred examples of insecticides of the composition are alpha-cypermethirn, chlorpyriphos, dimethoate, lambda-cyhalothrin or any mixture of the foregoing. Preferred examples of herbicides of the composition are Imazamox, Imazapyr, Imazethapyr, Tribenuron or any mixture of the foregoing.

In a preferred embodiment, the seed treatment with an ALS inhibitor is followed by a treatment of the emerged host plant with a composition comprising at least one fungicide or an agriculturally acceptable salt or derivative thereof and at least one insecticide or an agriculturally acceptable salt or derivative thereof and at least one herbicide or an agriculturally acceptable salt or derivative thereof, wherein the fungicide is azoxystobin, pyraclostrobin, metconazole, boscalid, dimoxystrobin or any mixture of the foregoing, the herbicide is are Imazamox, Imazapyr, Imazethapyr, Tribenuron or any mixture of the foregoing and the insecticide is alpha-cypermethirn, chlorpyriphos, dimethoate, lambda-cyhalothrin or any mixture of the foregoing.

In another preferred embodiment, the seed treatment with an ALS inhibitor is followed by a treatment of the emerged host plant with a composition comprising at least one fungicide or an agriculturally acceptable salt or derivative thereof and at least one insecticide or an agriculturally acceptable salt or derivative thereof and at least one herbicide or an agriculturally acceptable salt or derivative thereof and at least one plant growth regulator or an agriculturally acceptable salt or derivative thereof. Preferred fungicides of the composition are azoxystobin, pyraclostrobin, metconazole, boscalid, dimoxystrobin or any mixture of the foregoing. Preferred examples of insecticides of the composition are alpha-cypermethirn, chlorpyriphos, dimethoate, lambda-cyhalothrin or any mixture of the foregoing. Preferred examples of herbicides of the composition are Imazamox, Imazapyr, Imazethapyr, Tribenuron or any mixture of the foregoing. Preferred plant growth regulators of the composition are prohexadione, prohexadione-calcium, trinexapac, trinexapac-ethyl, mepiquat-chloride or any mixture of the foregoing.

In a preferred embodiment, the seed treatment with an ALS inhibitor is followed by a treatment of the emerged host plant with a composition comprising at least one fungicide or an agriculturally acceptable salt or derivative thereof and at least one insecticide or an agriculturally acceptable salt or derivative thereof and at least one herbicide or an agriculturally acceptable salt or derivative thereof and at least one plant growth regulator or an agriculturally acceptable salt or derivative thereof, wherein the fungicide is azoxystobin, pyraclostrobin, metconazole, boscalid, dimoxystrobin or any mixture of the foregoing, the herbicide is Imazamox, Imazapyr, Imazethapyr, Tribenuron or any mixture of the foregoing, the insecticide is alpha-cypermethirn, chlorpyriphos, dimethoate, lambda-cyhalothrin or any mixture of the foregoing and the plant growth regulator is prohexadione, prohexadione-calcium, trinexapac, trinexapac-ethyl and mepiquat-chloride or any mixture of the foregoing.

In another aspect, the present invention also relates to the seed from host plants selected from the group consisting of the families of Asteraceae, Brassicaceae, Poaceae, Solanaceae, Fabaceae or Leguminosae treated with an ALS inhibitor or an agriculturally acceptable salt or derivative thereof.

In a preferred embodiment, the seed may have been treated by dusting, slurrying, soaking, coating or pelleting the seed.

As used herein, the term **"agriculturally acceptable salts"** refers to, but is not limited to, any chemical compounds formed from the reaction of an acid with a base with all or part of the hydrogen of the acid replaced by a metal or any other cation and wherein the salts of those cations and the acid addition salts of those acids whose cations and anions, respectively, have no adverse effect on the activity of the active compounds.

Preferred cations are the ions of the alkali metals, preferably of lithium, sodium and potassium, of the alkaline earth metals, preferably of calcium and magnesium, and of the transition metals, preferably of manganese, copper, zinc and iron, further ammonium and substituted ammonium in which one to four hydrogen atoms are replaced by C₁-C₄-alkyl, hydroxy-C₁-C₄-alkyl, C₁-C₄-alkoxy-C₁-C₄-alkyl, hydroxy-C₁-C₄-alkoxy-C₁-C₄-alkyl, phenyl or benzyl, preferably ammonium, methylammonium, isopropylammonium, dimethylammonium, diisopropylammonium, trimethylammonium, heptylammonium, dodecylammonium, tetradecylammonium, tetramethylammonium, tetraethylammonium, tetrabutylammonium, 2 hydroxyethyl-ammonium (olamine salt), 2-(2-hydroxyeth-1-oxy)eth-1-ylammonium (diglycolamine salt), di(2-hydroxyeth-1-yl)-ammonium (diolamine salt), tris(2-hydroxyethyl)ammonium (trolamine salt), tris(2-hydroxypropyl)ammonium, benzyltrimethylammonium, benzyltriethylammonium, N,N,N-trimethylethanolammonium (choline salt), furthermore phosphonium ions, sulfonium ions, preferably tri(Cᵢ-C₄-alkyl)sulfonium, such as trimethylsulfonium, and sulfoxonium ions, preferably tri(C₁-C₄-alkyl)sulfoxonium, and finally the salts of polybasic amines such as N,N-bis-(3-aminopropyl)methylamine and diethylenetriamine.

Anions of useful acid addition salts are primarily chloride, bromide, fluoride, iodide, hydrogensulfate, methylsulfate, sulfate, dihydrogenphosphate, hydrogenphosphate, nitrate, bicarbonate, carbonate, hexafluorosilicate, hexafluorophosphate, benzoate and also the anions of C₁-C₄-alkanoic acids, preferably formate, acetate, propionate and butyrate.

As used herein, the term **"agriculturally acceptable derivatives"** refers to, but is not limited to, compounds having a carboxyl group that can be employed in the form of the acid, in the form of an agriculturally suitable salt as mentioned above or else in the form of other agriculturally acceptable derivatives, for example as amides, such as mono- and di-C₁-C₆-alkylamides or arylamides, as esters, for example as allyl esters, propargyl esters, C₁-C₁₀-alkyl esters, alkoxyalkyl esters, tefuryl ((tetrahydrofuran-2-yl)methyl) esters and also as thioesters, for example as C₁-C₁₀-alkylthio esters. Preferred mono- and di-C₁-C₆-alkylamides are the methyl and the dimethylamides. Preferred arylamides are, for example, the anilides and the 2-chloroanilides. Preferred alkyl esters are, for example, the methyl, ethyl, propyl, isopropyl, butyl, isobutyl, pentyl, mexyl (1 methylhexyl), meptyl (1-methylheptyl), heptyl, octyl or isooctyl (2-ethylhexyl) esters. Preferred C₁-C₄-alkoxy-C₁-C₄-alkyl esters are the straight-chain or branched C₁-C₄-alkoxy ethyl esters, for example the 2-methoxyethyl, 2-ethoxyethyl, 2-butoxyethyl (butotyl), 2-butoxypropyl or 3-butoxypropyl ester. An example of a straight-chain or branched C₁-C₁₀-alkylthio ester is the ethylthio ester.

As used herein, the term **"plant"** comprises **crop plants.** The term plants comprises, but is not limited to, plants of the families of Asterceae, Brassicaceae, Poaceae or Leguminosae. Examples of suitable crops include, but not limited to, Allium cepa, Ananas comosus, Arachis hypogaea, Asparagus officinalis, Avena sativa, Beta vulgaris spec. altissima, Beta vulgaris spec. rapa, Brassica napus var. napus, Brassica napus var. napobrassica, Brassica rapa var. silvestris, Brassica oleracea, Brassica nigra, Brassica juncea, Brassica campestris, Camellia sinensis, Carthamus tinctorius, Carya illinoinensis, Citrus limon, Citrus sinensis, Coffea arabica (Coffea canephora, Coffea liberica), Cucumis sativus, Cynodon dactylon, Daucus carota, Elaeis guineensis, Fragaria vesca, Glycine max, Gossypium hirsutum, (Gossypium arboreum, Gossypium herbaceum, Gossypium vitifolium), Helianthus annuus, Hevea brasiliensis, Hordeum vulgare, Humulus lupulus, Ipomoea batatas, Juglans regia, Lens culinaris, Linum usitatissimum, Lycopersicon lycopersicum, Malus spec., Manihot es-culenta, Medicago sativa, Musa spec., Nicotiana tabacum (N.rustica), Olea europaea, Oryza sativa, Phaseolus lunatus, Phaseolus vulgaris, Picea abies, Pinus spec., Pistacia vera, Pisum sativum, Prunus avium, Prunus persica, Pyrus communis, Prunus armeniaca, Prunus cerasus, Prunus dulcis and prunus domestica, Ribes sylvestre, Ricinus communis, Saccharum officinarum, Secale cereale, Sinapis alba, Solanum tuberosum, Sorghum bicolor (s. vulgare), Theobroma cacao, Trifolium pratense, Triticum aestivum, Triticale, Triticum durum, Vicia faba, Vitis vinifera, Zea mays. Preferred crops are Arachis hypogaea, Beta vulgaris spec. altissima, Brassica napus var. napus, Brassica oleracea, Brassica juncea, Citrus limon, Citrus sinensis, Coffea arabica (Coffea canephora, Coffea liberica), Cynodon dactylon, Glycine max, Gossypium hirsutum, (Gossypium arboreum, Gossypium herbaceum, Gossypium vitifolium), Helianthus annuus, Hordeum vulgare, Juglans regia, Lens culinaris, Linum usitatis-simum, Lycopersicon lycopersicum, Malus spec., Medicago sativa, Nicotiana tabacum (N.rustica), Olea europaea, Oryza sativa , Phaseolus lunatus, Phaseolus vulgaris, Pistacia vera, Pisum sativum, Prunus dulcis, Saccharum officinarum, Secale cereale, Solanum tuberosum, Sorghum bicolor (s. vulgare), Triticale, Triticum aestivum, Triticum durum, Vicia faba, Vitis vinifera and Zea mays.

Furthermore, the term plant also covers **genetically modified plants.** The term "genetically modified plants" is to be understood as plants, which genetic material has been modified by the use of recombinant DNA techniques in a way that under natural circumstances it cannot readily be obtained by cross breeding, mutations, natural recombination, breeding, mutagenesis, or genetic engineering. Typically, one or more genes have been integrated into the genetic material of a genetically modified plant in order to improve certain properties of the plant. Such genetic modifications also include, but are not limited to, targeted post-transtional modification of protein(s), oligo- or polypeptides e. g. by glycosylation or polymer additions such as prenylated, acetylated or farnesylated moieties or PEG moieties. The methods for generating genetically modified plants are generally known to the person skilled in the art.

Furthermore, plants are also covered that are by the use of recombinant DNA techniques capable to synthesize one or more insecticidal proteins, especially those known from the bacterial genus Bacillus, particularly from Bacillus thuringiensis, such as endotoxins, e. g. CrylA(b), CryIA(c), CryIF, CryIF(a2), CryIIA(b), CryIIIA, CryIIIB(b1) or Cry9c; vegetative insecticidal proteins (VIP), e. g. VIP1, VIP2, VIP3 or VIP3A; insecticidal proteins of bacteria colonizing nematodes, e. g. Photorhabdus spp. or Xenorhabdus spp.; toxins produced by animals, such as scorpion toxins, arachnid toxins, wasp toxins, or other insect-specific neurotoxins; toxins produced by fungi, such Streptomycetes toxins, plant lectins, such as pea or barley lectins; agglutinins; proteinase inhibitors, such as trypsin inhibitors, serine protease inhibitors, patatin, cystatin or papain inhibitors; ribosome-inactivating proteins (RIP), such as ricin, maize-RIP, abrin, luffin, saporin or bryodin; steroid metabolism enzymes, such as 3-hydroxy-steroid oxidase, ecdysteroid-IDP-glycosyl-transferase, cholesterol oxidases, ecdysone inhibitors or HMG-CoA-reductase; ion channel blockers, such as blockers of sodium or calcium channels; juvenile hormone esterase; diuretic hormone receptors (helicokinin receptors); stilben synthase, bibenzyl synthase, chitinases or glucanases. In the context of the present invention these insecticidal proteins or toxins are to be understood expressly also as pre-toxins, hybrid proteins, truncated or otherwise modified proteins. Hybrid proteins are characterized by a new combination of protein domains, (see, e. g. WO 02/015701). Further examples of such toxins or genetically modified plants capable of synthesizing such toxins are disclosed, e. g., in EP-A 374 753, WO 93/007278, WO 95/34656, EP-A 427 529, EP-A 451 878, WO 03/18810 und WO 03/52073. The methods for producing such genetically modified plants are generally known to the person skilled in the art and are described, e. g. in the publications mentioned above. These insecticidal proteins contained in the genetically modified plants impart to the plants producing these proteins tolerance to harmful pests from all taxonomic groups of athropods, especially to beetles (Coeloptera), two-winged insects (Diptera), and moths (Lepidoptera) and to nematodes (Nematoda). Genetically modified plants capable to synthesize one or more insecticidal proteins are, e. g., described in the publications mentioned above, and some of which are commercially available such as YieldGard® (corn cultivars producing the Cry1Ab toxin), YieldGard® Plus (corn cultivars producing Cry1Ab and Cry3Bb1 toxins), Starlink® (corn cultivars producing the Cry9c toxin), Her-culex® RW (corn cultivars producing Cry34Ab1, Cry35Ab1 and the enzyme Phosphino-thricin-N-Acetyltransferase [PAT]); NuCOTN® 33B (cotton cultivars producing the Cry1Ac toxin), Bollgard® I (cotton cultivars producing the Cry1Ac toxin), Bollgard® II (cotton cultivars producing Cry1Ac and Cry2Ab2 toxins); VIPCOT® (cotton cultivars producing a VIP-toxin); NewLeaf® (potato cultivars producing the Cry3A toxin); Bt-Xtra®, NatureGard®, KnockOut®, BiteGard®, Protecta®, Bt11 (e. g. Agrisure® CB) and Bt176 from Syngenta Seeds SAS, France, (corn cultivars producing the Cry1Ab toxin and PAT enyzme), MIR604 from Syngenta Seeds SAS, France (corn cultivars producing a modified version of the Cry3A toxin, c.f. WO 03/018810), MON 863 from Monsanto Europe S.A., Belgium (corn cultivars producing the Cry3Bb1 toxin), IPC 531 from Monsanto Europe S.A., Belgium (cotton cultivars producing a modified version of the Cry1Ac toxin) and 1507 from Pioneer Overseas Corporation, Belgium (corn cultivars producing the Cry1F toxin and PAT enzyme).

Moreover, the term plants also covers plants derived from the use of recombinant DNA techniques capable to synthesize one or more proteins to increase the resistance or tolerance of those plants to bacterial, viral or fungal pathogens. Examples of such proteins are the so-called "pathogenesis-related proteins" (PR proteins, see, e.g. EP-A 392 225), plant disease resistance genes (e. g. potato cultivars, which express resistance genes acting against Phytophthora infestans derived from the mexican wild potato Solanum bulbocastanum) or T4-lysozym (e.g. potato cultivars capable of synthesizing these proteins with increased resistance against bacteria such as Erwinia amylvora). The methods for producing such genetically modified plants are generally known to the person skilled in the art and are described, e.g. in the publications mentioned above.

Furthermore, the term plants also includes plants created by the use of recombinant DNA techniques which are capable to synthesize one or more proteins to increase the productivity (e.g. bio mass production, grain yield, starch content, oil content or protein content), tolerance to drought, salinity or other growth-limiting environmental factors or tolerance to pests and fungal, bacterial or viral pathogens of those plants.

Furthermore, the term plants also includes plants that contain by the use of recombinant DNA techniques a modified amount of substances of content or new substances of content, specifically to improve human or animal nutrition, e. g. oil crops that produce health-promoting longchain omega-3 fatty acids or unsaturated omega-9 fatty acids (e. g. Nexera® rape, DOW Agro Sciences, Canada).

Furthermore, plants are also covered that contain by the use of recombinant DNA techniques a modified amount of substances of content or new substances of content, specifically to improve raw material production, e.g. potatoes that produce increased amounts of amylopectin (e.g. Amflora® potato, BASF SE, Germany).

The term "plants" also includes plants that have been modified by breeding, mutagenesis or genetic engineering, e.g. have been **rendered tolerant** to applications of specific classes of herbicides. Tolerance to classes of herbicides has been developed such as auxin herbicides such as dicamba or 2,4-D; bleacher herbicides such as hydroxyphenylpyruvate dioxygenase (HPPD) inhibitors or phytoene desaturase (PDS) inhibitors; acetolactate synthase (ALS) inhibitors such as sulfonyl ureas or imidazolinones; enolpyruvyl shikimate 3-phosphate synthase (EPSP) inhibitors such as glyphosate; glutamine synthetase (GS) inhibitors such as glufosinate; protoporphyrinogen-IX oxidase (PPO) inhibitors; lipid biosynthesis inhibitors such as acetyl CoA carboxylase (ACCase) inhibitors; or oxynil (i. e. bromoxynil or ioxynil) herbicides as a result of conventional methods of breeding or genetic engineering. Furthermore, plants have been made resistant to multiple classes of herbicides through multiple genetic modifications, such as resistance to both glyphosate and glufosinate or to both glyphosate and a herbicide from another class such as ALS inhibitors, HPPD inhibitors, auxin herbicides, or ACCase inhibitors. These herbicide resistance technologies are, for example, described in Pest Management Science 61, 2005, 246; 61, 2005, 258; 61, 2005, 277; 61, 2005, 269; 61, 2005, 286; 64, 2008, 326; 64, 2008, 332; Weed Science 57, 2009, 108; Australian Journal of Agricultural Research 58, 2007, 708; Science 316, 2007, 1185; and references quoted therein. Examples of these herbicide resistance technologies are also described in US 2008/0028482, US2009/0029891, WO 2007/143690, WO 2010/080829, US 6307129, US 7022896, US 2008/0015110, US 7,632,985, US 7105724, and US 7381861, each herein incorporated by reference. Several cultivated plants have been rendered tolerant to herbicides by conventional methods of breeding (mutagenesis), e. g. Clearfield® summer rape (Canola, BASF SE, Germany) being tolerant to imidazolinones, e. g. imazamox, or ExpressSun® sunflowers (DuPont, USA) being tolerant to sulfonyl ureas, e. g. tribenuron. Genetic engineering methods have been used to render cultivated plants such as soybean, cotton, corn, beets and rape, tolerant to herbicides such as glyphosate, dicamba, imidazolinones and glufosinate, some of which are under development or commercially available under the brands or trade names RoundupReady® (glyphosate tolerant, Monsanto, USA), Cultivance® (imidazolinone tolerant, BASF SE, Germany) and LibertyLink® (glufosinate tolerant, Bayer CropScience, Germany).

As used herein, the term **"host plant"** includes, but is not limited to, plants that may be affected by parasite weeds. The term **"emerged host plant"** preferably refers to host plants wherein the seed has been sown and the plant subsequently developed to grow upwards so that it is partially above ground.

As used herein, the term "(*At*)" as in, e.g., A122(*At*)T refers to an amino acid substitution, for example of Alanine to Threonine, wherein the numbering of the amino acid refers to the respective number of the *Arabidopsis thaliana* protein .

As used herein, the term **"seed"** comprises seed of all types, such as corns, seeds, fruits, tubers, seedlings and similar forms. The seed may preferably be seed of the crop plants mentioned above, but also the seed of transgenic plants or plants obtained by customary breeding methods.

As used herein, the term **"parasitic weed"** refers to any kind of plant that negatively affects the host plant and may even be pathogenic. Parasitic weed comprises stem parasites and root parasites. Stem parasites occur in several families, and pathogenic members include some mistletoes (and dodder (Cuscuta and Cassytha). Root parasites are more common and are found in diverse taxonomic groups. Some of the most economically important root pathogens are in the broomrape family, Orobanchaceae. The term parasitic weed also includes any holoparasites, hemiparasites, obligate parasites, or facultative parasites. Facultative parasites contain chlorophyll and can be grown to maturity without hosts. Obligate parasites, on the other hand, require a host for maturation. Hemiparasites contain chlorophyll when mature (hence are photosynthetic) and obtain water, with its dissolved nutrients, by connecting to the host xylem via the haustorium. Holoparasites lack chlorophyll and must rely totally on the contents of the host xylem and phloem. Although these definitions imply absolute and discrete categories, some parasitic plants are intermediate between the hemi- and holoparasitic condition, e.g. Cuscuta (dodder).

As used herein, the term **"seed coating"** preferably refers applying a coat around the seed. Preferably, the coat comprises a very thin layer, preferably of less than 0.1 µm such as in the case of film coating to a thicker form of covering of seed and may contain fertiliziers, fungicides, insecticides, growth promoters and/or seed treatment, such as the ALS inhibitor seed treatment, as well as an inert carrier and a polymer outer shell.

As used herein, the term **"seed pelleting"** refers to adding artificial coverings to seeds, which can be used to cover irregular seed shapes and adding chemicals to the pellet matrix. The pellet matrix may comprise filling materials and glue such as loam, starch, tyllose (cellulose derivative), fertiliziers, insecticides, growth promoters and/or seed treatment such as the ALS inhibitor seed treatment, or polyacrylate/polyacrylamide polymers. A film coat may optionally be added onto the pelleting layer. **Seed pelleting** also covers increasing the size of very small seeds. Examples of very small seeds are horticultural seeds. This may provide improved planting features, e.g. singulate planting, the use of planting machines, or precise placement and visibility in/on the soil.

As used herein, the term **"herbicide tolerant"** or **"herbicide tolerance"** means that the plant is not negatively affected by the herbicide. Preferably, the plant is not affected when the herbicide is used in concentrations effective to protect the plant from the undesired weeds, especially undesired parasitic weeds. The herbicide tolerance can be naturally occurring or induced by genetic engineering or selection of variants produced by tissue culture or mutagenesis.

As used herein, the term **"fungicide"** comprises biocidal chemical compounds or biological organisms used to kill or inhibit fungi or fungal spores. Examples of fungicides include, but are not limited to, storbilurins, carboxamides, azoles, heterocyclic compounds, carbamates and other active compounds.

Examples for useful strobilurins include, but are not limited to, azoxystrobin, dimoxystrobin, enestroburin, fluoxastrobin, kresoxim-methyl, metominostrobin, orysastrobin, picoxystrobin, pyraclostrobin, pyrametostrobin, pyraoxystrobin, pyribencarb, trifloxystrobin, methyl (2-chloro-5-[1-(3-methylbenzyloxyimino)ethyl]benzyl)carbamate and 2-(2-(3-(2,6-dichlorophenyl)-1-methyl-allylideneaminooxymethyl)-phenyl)-2-methoxyimino-N-methyl-acetamide.

Examples for useful carboxamides include, but are not limited to carboxanilides including benalaxyl, benalaxyl-M, benodanil, bixafen, boscalid, carboxin, fenfuram, fenhexamid, flutolanil, furametpyr, isopyrazam, isotianil, kiralaxyl, mepronil, metalaxyl, metalaxyl-M (mefenoxam), ofurace, oxadixyl, oxycarboxin, penflufen, penthiopyrad, sedaxane, tecloftalam, thifluzamide, tiadinil, 2-amino-4-methyl-thiazole-5-carboxanilide, N-(3',4',5'-trifluorobiphenyl-2-yl)-3-difluoromethyl-1-methyl-1H-pyrazole-4-carboxamide, N-(4'-trifluoromethylthiobiphenyl-2-yl)-3-difluoromethyl-1-methyl-1H-pyrazole-4-carboxamide and N-(2-(1,3,3-trimethyl-butyl)-phenyl)-1,3-dimethyl-5-fluoro-1H-pyrazole-4-carboxamide; carboxylic morpholides including dimethomorph, flumorph, pyrimorph; benzoic acid amides including flumetover, fluopicolide, fluopyram, zoxamide; and other carboxamides including carpropamid, dicyclomet, mandiproamid, oxytetracyclin, silthiofarm and N-(6-methoxy-pyridin-3-yl) cyclopropanecarboxylic acid amide.

Examples for useful azoles include, but are not limited to, triazoles including azaconazole, bitertanol, bromuconazole, cyproconazole, difenoconazole, diniconazole, diniconazole-M, epoxiconazole, fenbuconazole, fluquinconazole, flusilazole, flutriafol, hexaconazole, imibenconazole, ipconazole, metconazole, myclobutanil, oxpoconazole, paclobutrazole, penconazole, propiconazole, prothioconazole, simeconazole, tebuconazole, tetraconazole, triadimefon, triadimenol, triticonazole, uniconazole; imidazoles including cyazofamid, imazalil, pefurazoate, prochloraz, triflumizol; benzimidazoles including benomyl, carbendazim, fuberidazole, thiabendazole; and others azoles including ethaboxam, etridiazole, hymexazole and 2-(4-chloro-phenyl)-N-[4-(3,4-dimethoxy-phenyl)-isoxazol-5-yl]-2-prop-2-ynyloxy-acetamide.

Examples for useful heterocyclic compounds include, but are not limited to, pyridines including fluazinam, pyrifenox, 3-[5-(4-chloro-phenyl)-2,3-dimethyl-isoxazolidin-3-yl]-pyridine, 3-[5-(4-methyl-phenyl)-2,3-dimethyl-isoxazolidin-3-yl]-pyridine; pyrimidines including bupirimate, cyprodinil, diflumetorim, fenarimol, ferimzone, mepanipyrim, nitrapyrin, nuarimol, pyrimethanil; Piperazines including triforine; pyrroles including fenpiclonil, fludioxonil; morpholines including aldimorph, dodemorph, dodemorph-acetate, fenpropimorph, tridemorph; piperidines including fenpropidin; dicarboximides including fluoroimid, iprodione, procymidone, vinclozolin; non-aromatic 5-membered heterocycles including famoxadone, fenamidone, flutianil, octhilinone, probenazole, 5-amino-2-isopropyl-3-oxo-4-ortho-tolyl-2,3-dihydro-pyrazole-1-carbothioic acid S-allyl ester; and other heterocyclic compounds including acibenzolar-S-methyl, ametoctradin, amisulbrom, anilazin, blasticidin-S, captafol, captan, chinomethionat, dazomet, debacarb, diclomezine, difenzoquat, difenzoquat-methylsulfate, fenoxanil, Folpet, oxolinic acid, piperalin, proquinazid, pyroquilon, quinoxyfen, triazoxide, tricyclazole, 2-butoxy-6-iodo-3-propylchromen-4-one, 5-chloro-1-(4,6-dimethoxy-pyrimidin-2-yl)-2-methyl-1H-benzoimidazole and 5-chloro-7-(4-methylpiperidin-1-yl)-6-(2,4,6-trifluorophenyl)-[1,2,4]triazolo[1,5-a]pyrimidine.

Examples for useful carbamates include, but are not limited to, thio- and dithiocarbamates including ferbam, mancozeb, maneb, metam, methasulphocarb, metiram, propineb, thiram, zineb, ziram; other carbamates including benthiavalicarb, diethofencarb, iprovalicarb, propamocarb, propamocarb hydrochlorid, valifenalate and N-(1-(1-(4-cyano-phenyl)ethanesulfonyl)-but-2-yl) carbamic acid-(4-fluorophenyl) ester.

Examples for useful other active substances include, but are not limited to, guanidines including guanidine, dodine, dodine free base, guazatine, guazatine-acetate, iminoctadine, iminoctadinetriacetate, iminoctadine-tris(albesilate); antibiotics including kasugamycin, kasugamycin hydrochloride-hydrate, streptomycin, polyoxine, validamycin A; nitrophenyl derivates including binapacryl, dinobuton, dinocap, nitrthal-isopropyl, tecnazen; organometal compounds including fentin salts, such as fentin-acetate, fentin chloride or fentin hydroxide; sulfur-containing heterocyclyl compounds including dithianon, isoprothiolane; organophosphorus compounds including edifenphos, fosetyl, fosetyl-aluminum, iprobenfos, phosphorous acid and its salts, pyrazophos, tolclofos-methyl; organochlorine compounds including chlorothalonil, dichlofluanid, dichlorophen, flusulfamide, hexachlorobenzene, pencycuron, pentachlorphenole and its salts, phthalide, quintozene, thiophanate-methyl, tolylfluanid, N-(4-chloro-2-nitro-phenyl)-N-ethyl-4-methyl-benzenesulfonamide; inorganic active substances including Bordeaux mixture, copper acetate, copper hydroxide, copper oxychloride, basic copper sulfate, sulfur; and other active substances including biphenyl, bronopol, cyflufenamid, cymoxanil, diphenylamin, metrafenone, mildiomycin, oxin-copper, prohexadione-calcium, spiroxamine, tebufloquin, tolylfluanid, N-(cyclopropylmethoxyimino-(6-difluoro-methoxy-2,3-difluoro-phenyl)-methyl)-2-phenyl acetamide, N'-(4-(4-chloro-3-trifluoromethyl-phenoxy)-2,5-dimethyl-phenyl)-N-ethyl-N-methyl formamidine, N'-(4-(4-fluoro-3-trifluoromethyl-phenoxy)-2,5-dimethyl-phenyl)-N-ethyl-N-methyl formamidine, N'-(2-methyl-5-trifluoromethyl-4-(3-trimethylsilanyl-propoxy)-phenyl)-N-ethyl-N-methyl formamidine, N'-(5-difluoromethyl-2-methyl-4-(3-trimethylsilanyl-propoxy)-phenyl)-N-ethyl-N-methyl formamidine, 2-{1-[2-(5-methyl-3-trifluoromethyl-pyrazole-1-yl)-acetyl]-piperidin-4-yl}-thiazole-4-carboxylic acid methyl-(1,2,3,4-tetrahydro-naphthalen-1-yl)-amide, 2-{1-[2-(5-methyl-3-trifluoromethyl-pyrazole-1-yl)-acetyl]-piperidin-4-yl}-thiazole-4-carboxylic acid methyl-(R)-1,2,3,4-tetrahydro-naphthalen-1-yl-amide, methoxy-acetic acid 6-tert-butyl-8-fluoro-2,3-dimethyl-quinolin-4-yl ester and *N-*Methyl-2-{1-[(5-methyl-3-trifluoromethyl-1H-pyrazol-1-yl)-acetyl]-piperidin-4-yl}-*N*[(1R)-1,2,3,4-tetrahydronaphthalen-1-yl]-4-thiazolecarboxamide.

As used herein, the term **"plant growth regulators"** (PGR) refers to compounds that may interact with the hormonal system of the treated plants and regulate the growth of a plant or parts of a plant. They may affect developmental processes and differentiation in plants at low dosages without having a nutritive value or being phytotoxic. More specifically, various PGRs can, for example, reduce plant height, stimulate seed germination, induce flowering, darken leaf coloring, minimize lodging of cereals, change the rate of plant growth and modify the timing and efficiency of flowering, fruit formation, ripening, fruit drop, defoliation or quality traits. There are several different classes of plant growth regulators. Known classes include, but are not limited to, azoles (such as uniconazole and paclobutrazol), cyclohexane carboxylates (such as trinexapac, trinexapac-ethyl, prohexadione and prohexadione-calcium), pyrimidinyl carbinols (such as flurprimidol and ancyrnidol), quarternary ammoniums (such as chlormequat-chloride and mepiquatchloride) and sulphonyl-amino phenyl-acetamides (such as mefluidide). Examples of useful growth regulators include, but are not limited to, abscisic acid, amidochlor, ancymidol, 6-benzylaminopurine, brassinolide, butralin, chlormequat (chlormequat chloride), choline chloride, cyclanilide, daminozide, dikegulac, dimethipin, 2,6-dimethylpuridine, ethephon, flumetralin, flurprimidol, fluthiacet, forchlorfenuron, gibberellic acid, inabenfide, indole-3-acetic acid , maleic hydrazide, mefluidide, mepiquat (mepiquat chloride), naphthaleneacetic acid, N-6-benzyladenine, paclobutrazol, prohexadione (prohexadione-calcium), prohydrojasmon, thidiazuron, triapenthenol, tributyl phosphorotrithioate, 2,3,5-tri-iodobenzoic acid , trinexapac-ethyl and uniconazole.

As used herein, the term **"herbicide"** comprises any substance used to destroy or inhibit the growth of plants, preferably weeds. Non-limiting examples of herbicides comprise acetamides such as acetochlor, alachlor, butachlor, dimethachlor, dimethenamid, flufenacet, mefenacet, metolachlor, metazachlor, napropamide, naproanilide, pethoxamid, pretilachlor, propachlor, thenylchlor; amino acid derivatives such as bilanafos, glyphosate, glufosinate, sulfosate; aryloxyphenoxypropionates such as clodinafop, cyhalofop-butyl, fenoxaprop, fluazifop, haloxyfop, metamifop, propaquizafop, quizalofop, quizalofop-P-tefuryl; Bipyridyls such as diquat, paraquat; (thio)carbamates such as asulam, butylate, carbetamide, desmedipham, dimepiperate, eptam (EPTC), esprocarb, molinate, orbencarb, phenmedipham, prosulfocarb, pyributicarb, thiobencarb, triallate; cyclohexanediones such as butroxydim, clethodim, cycloxydim, profoxydim, sethoxydim, tepraloxydim, tralkoxydim; dinitroanilines such as benfluralin, ethalfluralin, oryzalin, pendimethalin, prodiamine, trifluralin; diphenyl ethers such as acifluorfen, aclonifen, bifenox, diclofop, ethoxyfen, fomesafen, lactofen, oxyfluorfen; hydroxybenzonitriles such as bomoxynil, dichlobenil, ioxynil; imidazolinones such as imazamethabenz, imazamox, imazapic, imazapyr, imazaquin, imazethapyr; phenoxy acetic acids such as clomeprop, 2,4-dichlorophenoxyacetic acid (2,4-D), 2,4-DB, dichlorprop, MCPA, MCPA-thioethyl, MCPB, Mecoprop; pyrazines such as chloridazon, flufenpyr-ethyl, fluthiacet, norflurazon, pyridate; pyridines such as aminopyralid, clopyralid, diflufenican, dithiopyr, fluridone, fluroxypyr, picloram, picolinafen, thiazopyr; sulfonyl ureas such as amidosulfuron, azimsulfuron, bensulfuron, chlorimuron-ethyl, chlorsulfuron, cinosulfuron, cyclosulfamuron, ethoxysulfuron, flazasulfuron, flucetosulfuron, flupyrsulfuron, foramsulfuron, halosulfuron, imazosulfuron, iodosulfuron, mesosulfuron, metazosulfuron, metsulfuron-methyl, nicosulfuron, oxasulfuron, primisulfuron, prosulfuron, pyrazosulfuron, rimsulfuron, sulfometuron, sulfosulfuron, thifensulfuron, triasulfuron, tribenuron, trifloxysulfuron, triflusulfuron, tritosulfuron, 1-((2-chloro-6-propyl-imidazo[1,2-b]pyridazin-3-yl)sulfonyl)-3-(4,6-dimethoxy-pyrimidin-2-yl)urea; triazines such as ametryn, atrazine, cyanazine, dimethametryn, ethiozin, hexazinone, metamitron, metribuzin, prometryn, simazine, terbuthylazine, terbutryn, triaziflam; ureas such as chlorotoluron, daimuron, diuron, fluometuron, isoproturon, linuron, methabenzthiazuron, tebuthiuron; other acetolactate synthase inhibitors such as bispyribac-sodium, cloransulam-methyl, diclosulam, florasulam, flucarbazone, flumetsulam, metosulam, ortho-sulfamuron, penoxsulam, propoxycarbazone, pyribambenz-propyl, pyribenzoxim, pyriftalid, pyriminobac-methyl, pyrimisulfan, pyrithiobac, pyroxasulfone, pyroxsulam; and others such as amicarbazone, aminotriazole, anilofos, beflubutamid, benazolin, bencarbazone,benfluresate, benzofenap, bentazone, benzobicyclon, bicyclopyrone, bromacil, bromobutide, butafenacil, butamifos, cafenstrole, carfentrazone, cinidon-ethyl, chlorthal, cinmethylin, clomazone, cumyluron, cyprosulfamide, dicamba, difenzoquat, diflufenzopyr, *Drechslera monoceras,* endothal, ethofumesate, etobenzanid, fenoxasulfone, fentrazamide, flumiclorac-pentyl, flumioxazin, flupoxam, flurochloridone, flurtamone, indanofan, isoxaben, isoxaflutole, lenacil, propanil, propyzamide, quinclorac, quinmerac, mesotrione, methyl arsonic acid, naptalam, oxadiargyl, oxadiazon, oxaziclomefone, pentoxazone, pinoxaden, pyraclonil, pyraflufen-ethyl, pyrasulfotole, pyrazoxyfen, pyrazolynate, quinoclamine, saflufenacil, sulcotrione, sulfentrazone, terbacil, tefuryltrione, tembotrione, thiencarbazone, topramezone, (3-[2-chloro-4-fluoro-5-(3-methyl-2,6-dioxo-4-trifluoromethyl-3,6-dihydro-2H-pyrimidin-1-yl)-phenoxy]-pyridin-2-yloxy)-acetic acid ethyl ester, 6-amino-5-chloro-2-cyclopropyl-pyrimidine-4-carboxylic acid methyl ester, 6-chloro-3-(2-cyclopropyl-6-methyl-phenoxy)-pyridazin-4-ol, 4-amino-3-chloro-6-(4-chloro-phenyl)-5-fluoropyridine-2-carboxylic acid, 4-amino-3-chloro-6-(4-chloro-2-fluoro-3-methoxy-phenyl)-pyridine-2-carboxylic acid methyl ester, and 4-amino-3-chloro-6-(4-chloro-3-dimethylamino-2-fluorophenyl)-pyridine-2-carboxylic acid methyl ester.

As used herein, the term **"insecticide"** refers to any substance that is used to kill insects. Examples of insectides include, but are not limited to organo(thio)phosphates such as acephate, azamethiphos, azinphos-methyl, chlorpyrifos, chlorpyrifos-methyl, chlorfenvinphos, diazinon, dichlorvos, dicrotophos, dimethoate, disulfoton, ethion, fenitrothion, fenthion, isoxathion, malathion, methamidophos, methidathion, methyl-parathion, mevinphos, monocrotophos, oxydemeton-methyl, paraoxon, parathion, phenthoate, phosalone, phosmet, phosphamidon, phorate, phoxim, pirimiphos-methyl, profenofos, prothiofos, sulprophos, tetrachlorvinphos, terbufos, triazophos, trichlorfon; carbamates such as alanycarb, aldicarb, bendiocarb, benfuracarb, carbaryl, carbofuran, carbosulfan, fenoxycarb, furathiocarb, methiocarb, methomyl, oxamyl, pirimicarb, propoxur, thiodicarb, triazamate; pyrethroids such as allethrin , bifenthrin, cyfluthrin, cyhalothrin, cyphenothrin, cypermethrin, alpha-cypermethrin, beta-cypermethrin, zeta-cypermethrin, deltamethrin, esfenvalerate, etofenprox, fenpropathrin, fenvalerate, imiprothrin, lambda-cyhalothrin, permethrin, prallethrin, pyrethrin I and II, resmethrin, silafluofen, tau-fluvalinate, tefluthrin, tetramethrin, tralomethrin, transfluthrin, profluthrin, dimefluthrin; insect growth regulators such as a) chitin synthesis inhibitors: benzoylureas: chlorfluazuron, cyramazin, diflubenzuron, flucycloxuron, flufenoxuron, hexaflumuron, lufenuron, novaluron, teflubenzuron, triflumuron; buprofezin, diofenolan, hexythiazox, etoxazole, clofentazine; b) ecdysone antagonists: halofenozide, methoxyfenozide, tebufenozide, azadirachtin; c) juvenoids: pyriproxyfen, methoprene, fenoxycarb; d) lipid biosynthesis inhibitors: spirodiclofen, spiromesifen, spirotetramat; nicotinic receptor agonists/antagonists compounds such as clothianidin, dinotefuran, flupyradifurone, imidacloprid, thiamethoxam, nitenpyram, acetamiprid, thiacloprid, 1-2-chloro-thiazol-5-ylmethyl)-2-nitrimino-3,5-dimethyl-[1,3,5]triazinane; GABA antagonist compounds suc has endosulfan, ethiprole, fipronil, vaniliprole, pyrafluprole, pyriprole, 5-amino-1-(2,6-dichloro-4-methyl-phenyl)-4-sulfinamoyl-1H-pyrazole-3-carbothioic acid amide; macrocyclic lactone insecticides suc has abamectin, emamectin, milbemectin, lepimectin, spinosad, spinetoram; mitochondrial electron transport inhibitor (METI) I acaricides suc has fenazaquin, pyridaben, tebufenpyrad, tolfenpyrad, flufenerim; METI II and III compounds such as acequinocyl, fluacyprim, hydramethylnon; Uncouplers suc has chlorfenapyr; oxidative phosphorylation inhibitors suc has cyhexatin, diafenthiuron, fenbutatin oxide, propargite; moulting disruptor compounds suc has cryomazine; mixed function oxidase inhibitors suc has piperonyl butoxide; sodium channel blockers such as indoxacarb, metaflumizone; ryanodine receptor inhibitors such as chlorantraniliprole, cyantraniliprole, flubendiamide, N-[4,6-dichloro-2-[(diethyl-lambda-4-sulfanylidene)carbamoyl]-phenyl]-2-(3-chloro-2-pyridyl)-5-(trifluoromethyl)pyrazole-3-carboxamide; N-[4-chloro-2-[(diethyl-lambda-4-sulfanylidene)carbamoyl]-6-methylphenyl]-2-(3-chloro-2-pyridyl)-5-(trifluoromethyl)pyrazole-3-carboxamide; N-[4-chloro-2-[(di-2-propyl-lambda-4-sulfanylidene)carbamoyl]-6-methyl-phenyl]-2-(3-chloro-2-pyridyl)-5-(trifluoromethyl)pyrazole-3-carboxamide; N-[4,6-dichloro-2-[(di-2-propyl-lambda-4-sulfanylidene)carbamoyl]-phenyl]-2-(3-chloro-2-pyridyl)-5-(trifluoromethyl)pyrazole-3-carboxamide; N-[4,6-dichloro-2-[(diethyl-lambda-4-sulfanylidene)carbamoyl]-phenyl]-2-(3-chloro-2-pyridyl)-5-(difluoromethyl)pyrazole-3-carboxamide; N-[4,6-dibromo-2-[(di-2-propyl-lambda-4-sulfanylidene)carbamoyl]-phenyl]-2-(3-chloro-2-pyridyl)-5-(trifluoromethyl)pyrazole-3-carboxamide; N-[4-chloro-2-[(di-2-propyl-lambda-4-sulfanylidene)carbamoyl]-6-cyano-phenyl]-2-(3-chloro-2-pyridyl)-5-(trifluoromethyl)pyrazole-3-carboxamide; N-[4,6-dibromo-2-[(diethyllambda-4-sulfanylidene)carbamoyl]-phenyl]-2-(3-chloro-2-pyridyl)-5-(trifluoromethyl)pyrazole-3-carboxamide; cyazypyr, rynaxapyr and others suc has benclothiaz, bifenazate, cartap, flonicamid, pyridalyl, pymetrozine, sulfur, thiocyclam, cyenopyrafen, flupyrazofos, cyflumetofen, amidoflumet, imicyafos, bistrifluron, pyrifluquinazon and 1,1'-[(3S,4R,4aR,6S,6aS, 12R, 12aS, 12bS)-4-[[(2-cyclopropylacetyl)oxy]methyl]-1,3,4,4a,5,6,6a,12,12a,12b-decahydro-12-hydroxy-4,6a,12b-trimethyl-11-oxo-9-(3-pyridinyl)-2H,11H-naphtho[2,1-b]pyrano[3,4-e]pyran-3,6-diyl] cyclopropaneacetic acid ester.

As used herein the term **"fertilizer"** refers to any substance that is added to the soil to help the growth of plants. Examples of fertilizers include, but not limited to, ammonium sulfate, ammonium phosphate, ammonium nitrate, and ureas.

### Example 1

The experiment was carried out as field trial in Turkey on a plot of about 24 m².

Seeds of the imidazolinone tolerant sunflower variety CLHAplus - Paraiso 1000 were used. Prior to sowing, the seeds were treated with Imazamox by liquid seed dressing.

The sunflower plants emerged after 18 days and were harvested about 3,5 months after sowing. The date of appearance of the parasitic weed Orobanche as well as the number of Orobanche per plot were recorded, the latter 2 days before harvest.

In Table 1, the results are summarized:

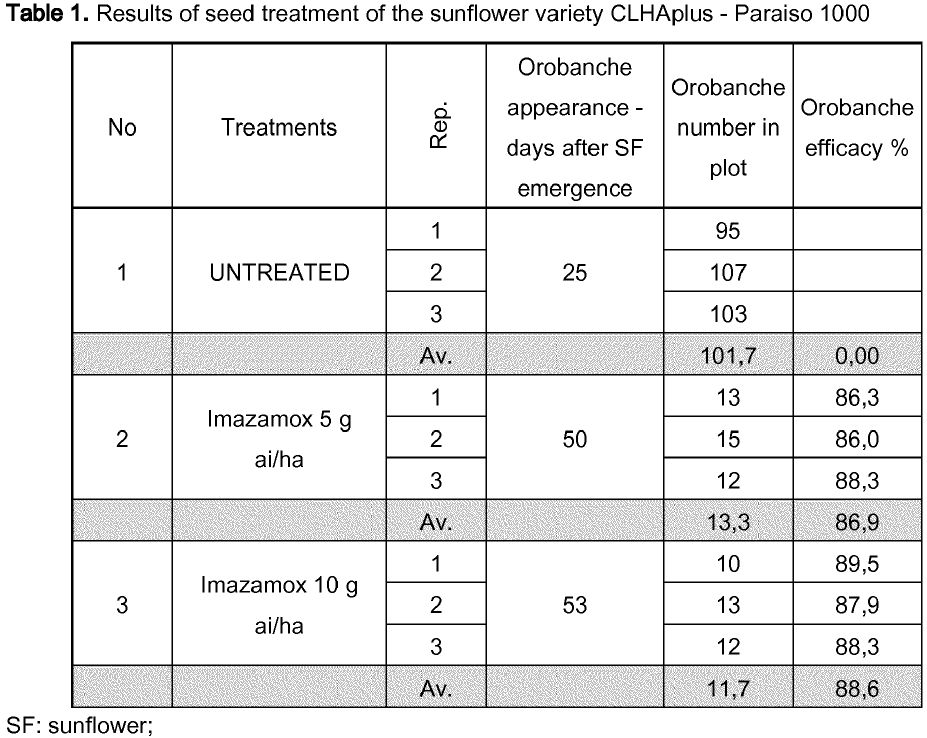

Orobanche appeared significantly later in plots with Imazamox treated seed. Moreover, the number of Orobanche observed per plot was significantly reduced by the seed treatment (101,7 vs. 13,3 and 11,7 respectively).

## Claims

1. A method for controlling parasitic weeds of host plants, comprising the step of treating the seed of said host plants with a composition comprising an acetolactate synthase (ALS) inhibitor or an agriculturally acceptable salt or derivative thereof, wherein the ALS inhibitor is selected from the group consisting of imidazolinones, sulfonylureas, triazolopyrimidines, pyrimidinylbenzoates, sulfonylamino carbonyl triazolinones and combinations thereof.

2. The method as claimed in claim 1, wherein the parasitic weed is from the genus Orobanche, from the genus Conopholis, from the genus Striga, or from the genus Cuscuta.

3. The method as claimed in claim 1 or 2, wherein the host plant is selected from the group consisting of the family of Asteraceae, the family of Brassicaceae, the family of Poaceae, the family of Solanaceae, or the family of Leguminosae.

4. The method as claimed in any one of claims 1 to 3, wherein the composition comprises
a) an imidazolinone selected from the group consisting of imazamethabenz, imazamethabenz-methyl, imazamox, imazapic, imazapyr, imazaquin and imazethapyr;
b) a sulfonylurea selected from the group consisting of amidosulfuron, azimsulfuron, bensulfuron, bensulfuron-methyl, chlorimuron, chlorimuron-ethyl, chlorsulfuron, cinosulfuron, cyclosulfamuron, ethametsulfuron, ethametsulfuron-methyl, ethoxysulfuron, flazasulfuron, flucetosulfuron, flupyrsulfuron, flupyrsulfuron-methyl-sodium, foramsulfuron, halosulfuron, halosulfuron-methyl, imazosulfuron, iodosulfuron, iodosulfuron-methyl-sodium, iofensulfuron, iofensulfuron-sodium, mesosulfuron, metazosulfuron, metsulfuron, metsulfuron-methyl, nicosulfuron, orthosulfamuron, oxasulfuron, primisulfuron, primisulfuron-methyl, propyrisulfuron, prosulfuron, pyrazosulfuron, pyrazosulfuron-ethyl, rimsulfuron, sulfometuron, sulfometuron-methyl, sulfosulfuron, thifensulfuron, thifensulfuron-methyl, triasulfuron, tribenuron, tribenuron-methyl, trifloxysulfuron, triflusulfuron, triflusulfuron-methyl and tritosulfuron;
c) a triazolopyrimidine or sulfonanilide selected from the group consisting of cloransulam, cloransulam-methyl, diclosulam, flumetsulam, florasulam, metosulam, penoxsulam, pyrimisulfan, pyroxsulam and triafamone;
d) pyrimidinylbenzoates selected from the group consisting of bispyribac, bispyribac-sodium, pyribenzoxim, pyriftalid, pyriminobac, pyriminobac-methyl, pyrithiobac, pyrithiobac-sodium, 4-[[[2-[(4,6-dimethoxy-2-pyrimidinyl)oxy]phenyl]methyl]amino]-benzoic acid-1-methylethyl ester (CAS 420138-41-6), 4-[[[2-[(4,6-dimethoxy-2-pyrimidinyl)oxy]phenyl]methyl]amino]-benzoic acid propyl ester (CAS 420138-40-5), N-(4-bromophenyl)-2-[(4,6-dimethoxy-2-pyrimidinyl)oxy]benzenemethanamine (CAS 420138-01-8),
e) sulfonylaminocarbonyl-triazolinone selected from the group consisting of flucarbazone, flucarbazone-sodium, propoxycarbazone, propoxycarbazone-sodium, thiencarbazone and thiencarbazone-methyl; or
f) combinations of any compounds of a) to e).

5. The method as claimed in any one of claims 1 to 4, wherein the composition comprises an imidazolinone selected from the group consisting of imazamox, imazapyr, imazethapyr, imazaquin, imazamethabenz and combinations thereof.

6. The method as claimed in any one of claims 1 to 4, wherein the composition comprises imazamox.

7. The method as claimed in any one of claims 1 to 4, wherein the composition comprises imazethapyr.

8. The method as claimed in any one of claims 1 to 4, wherein the composition comprises imazapyr.

9. The method as claimed in any one of claims 1 to 4, wherein the composition comprises tribenuron.

10. The method as claimed in any one of the preceding claims, wherein the step of treating the seed is followed by a treatment of the emerged host plants with a composition comprising an acetolactate synthase (ALS) inhibitor or an agriculturally acceptable salt or derivative thereof, wherein the ALS inhibitor is selected from the group consisting of imidazolinones, sulfonylureas, triazolopyrimidines, pyrimidinylbenzoates, sulfonylamino carbonyl triazolinones and combinations thereof.

11. The method as claimed in claim 10, wherein the emerged host plants are treated with a composition comprising
a) an imidazolinone selected from the group consisting of imazamethabenz, imazamethabenz-methyl, imazamox, imazapic, imazapyr, imazaquin and imazethapyr;
b) a sulfonylurea selected from the group consisting of amidosulfuron, azimsulfuron, bensulfuron, bensulfuron-methyl, chlorimuron, chlorimuron-ethyl, chlorsulfuron, cinosulfuron, cyclosulfamuron, ethametsulfuron, ethametsulfuron-methyl, ethoxysulfuron, flazasulfuron, flucetosulfuron, flupyrsulfuron, flupyrsulfuron-methyl-sodium, foramsulfuron, halosulfuron, halosulfuron-methyl, imazosulfuron, iodosulfuron, iodosulfuron-methyl-sodium, iofensulfuron, iofensulfuron-sodium, mesosulfuron, metazosulfuron, metsulfuron, metsulfuron-methyl, nicosulfuron, orthosulfamuron, oxasulfuron, primisulfuron, primisulfuronmethyl, propyrisulfuron, prosulfuron, pyrazosulfuron, pyrazosulfuron-ethyl, rimsulfuron, sulfometuron, sulfometuron-methyl, sulfosulfuron, thifensulfuron, thifensulfuron-methyl, triasulfuron, tribenuron, tribenuron-methyl, trifloxysulfuron, triflusulfuron, triflusulfuronmethyl and tritosulfuron;
c) a triazolopyrimidine or sulfonanilide selected from the group consisting of cloransulam, cloransulam-methyl, diclosulam, flumetsulam, florasulam, metosulam, penoxsulam, pyrimisulfan, pyroxsulam and trifamone;
d) pyrimidinylbenzoates selected from the group consisting of bispyribac, bispyribac-sodium, pyribenzoxim, pyriftalid, pyriminobac, pyriminobac-methyl, pyrithiobac, pyrithiobac-sodium, 4-[[[2-[(4,6-dimethoxy-2-pyrimidinyl)oxy]phenyl]methyl]amino]-benzoic acid-1-methylethyl ester (CAS 420138-41-6), 4-[[[2-[(4,6-dimethoxy-2-pyrimidinyl)oxy]phenyl]methyl]amino]-benzoic acid propyl ester (CAS 420138-40-5), N-(4-bromophenyl)-2-[(4,6-dimethoxy-2-pyrimidinyl)oxy]benzenemethanamine (CAS 420138-01-8),
e) sulfonylaminocarbonyl-triazolinone selected from the group consisting of flucarbazone, flucarbazone-sodium, propoxycarbazone, propoxycarbazone-sodium, thiencarbazone and thiencarbazone-methyl; or
f) combinations of any compounds of a) to e).

12. The method as claimed in claim 10 or 11, wherein the emerged host plants are treated with a composition comprising an imidazolinone selected from the group consisting of imazamox, imazaquin, imazamethabenz, imazapyr, imazethapyr and combinations thereof.

13. The method as claimed in claim 10 or 11, wherein the emerged host plants are treated with a composition comprising imazamox, imazapyr or combinations thereof.

14. The method as claimed in claim 10 or 11, wherein the emerged host plants are treated with a composition comprising imazamox.

15. The method as claimed in claim 10 or 11, wherein the emerged host plants are treated with a composition comprising a sulfonylurea selected from the group consisting of tribenuron-methyl, thifensulfuron-methyl, mesosulfuron, imazasulfuron, foramsulfuron, metsulfuron, ethametsulfuron and combinations thereof.

16. The method as claimed in claim 10 or 11, wherein the emerged host plants are treated with a composition comprising a sulfonylurea selected from the group consisting of tribenuron-methyl, ethametsulfuron and combinations thereof.

17. The method as claimed in any one of the preceding claims, wherein the host plant is selected from the group consisting of
a) *Helianthus annuus* containing a herbicide tolerance trait of (1) an AHASL (acetohydroxyacid synthase large subunit) having an A122(*At*)T substitution, or (2) an AHASL variant thereof that contains both the A122(*At*)T substitution and a second substitution that can be one or more of P197(*At*)Q, P197(*At*)S, P197(*At*)L T203(*At*)I, T203(*At*)X, A205(*At*)D, A205(*At*)V, W574(*At*)L, A653(*At*)N, A653(*At*)T, A653(*At*)F, or A653(*At*)V, wherein X may be selected as any natural amino acid;
b) *Helianthus annuus* containing two herbicide tolerance traits, the trait with the AHASL A122(*At*)T substitution and a second trait having an AHASL with an A205(*At*)V substitution, an AHASL with a P197(*At*)S substitution, an AHASL with a P197(*At*)L substitution or an AHASL with a W574(*At*)L substitution;
c) *Helianthus annuus* containing a herbicide tolerance trait having an AHASL with one A205(*At*)V substitution;
d) *Helianthus annuus* containing a herbicide tolerance trait trait having an AHASL with one P197(*At*)L substitution;
e) *Helianthus annuus* containing a herbicide tolerance trait having an AHASL with one P197(*At*)S substitution;
f) *Helianthus annuus* containing a herbicide tolerance trait having an AHASL with one W574(*At*)L substitution;
g) *Brassica* containing a herbicide tolerance trait having an AHASL with two substitutions, an A122(*At*)T substitution and an S653(*At*)N substitution;
h) *Brassica* containing a herbicide tolerance trait having an AHASL with two substitutions, an W574(*At*)L substitution and an S653(*At*)N substitution;
i) *Brassica* containing both the herbicide tolerance trait in g) or h) and one or two additional herbicide tolerance trait(s) that each have AHASL substitution(s) at at least one of the positions A122(*At*), P197(*At*), R199(*At*), T203(*At*), A205(*At*), W574(*At*), S653(*At*), or G654(*At*);
j) *Brassica* containing a herbicide tolerance trait having an AHASL with one A122(*At*)T substitution;
k) *Brassica* containing a herbicide tolerance trait having an AHASL with one W574(*At*)L substitution;
l) *Brassica* containing a herbicide tolerance trait having an AHASL with one A205(*At*)V substitution;
m) *Brassica* containing a herbicide tolerance trait having an S653(*At*)N substitution of the AHAS1 enzyme and/or a W574(*At*)L substitution of the AHAS3 enzyme.
n) *Oryza sativa* containing a herbicide tolerance trait having an AHASL with at least one substitution selected from the group consisting of A205(*At*)V, S653(*At*)N, G654(*At*)E, A122(*At*)T, P197(*At*)X wherein X may be selected as any natural amino acid, and W574(*At*)L;
o) *Oryza sativa* containing a herbicide tolerance trait of (1) an AHASL with an A205(*At*)V substitution, an S653(At)N substitution, a G654(At)E substitution, an A122(At)T substitution or a P197(At)X substitution or a W574(At)L substitution , or (2) an AHASL variant thereof that contains one of the substitutions from (1) and a second substitution that can be one or more of P197(*At*)Q, P197(*At*)X, T203(*At*)I, T203(*At*)X, A205(*At*)D, A205(*At*)V, W574(*At*)L, A653(*At*)N, A653(*At*)T, A653(*At*)F, or A653(*At*)V, S653(*At*)N, G654(At)E, A122(*At*)T, W574(*At*)L wherein X may be selected as any natural amino acid;
p) *Zea mays* containing a herbicide tolerance trait having an AHASL with at least one substitution selected from the group consisting of A205(*At*)V, S653(*At*)N, A122(*At*)T, P197(*At*)X wherein X may be selected as any natural amino acid, and W574(*At*)L;
q) *Zea mays* containing a herbicide tolerance trait of (1) an AHASL with an A205(*At*)V substitution, an S653(At)N substitution, an A122(At)T substitution, a P197(At)X substitution or a W574(At)L substitution, or (2) an AHASL variant thereof that contains one of the substitutions from (1) and a second substitution that can be one or more of P197(*At*)Q, P197(*At*)X, T203(*At*)I, T203(*At*)X, A205(*At*)D, A205(*At*)V, W574(*At*)L, A653(A*t*)N, A653(*At*)T, A653(*At*)F, A653(*At*)V, S653(*At*)N, A122(*At*)T, or W574(*At*)L wherein X may be selected as any natural amino acid.

18. The method of claim 17 option g) to m), wherein the Brassica is selected from the group consisting of *Brassica napus, Braccisa juncea* and *Brassica rapa.*

19. Seed from host plants selected from the group consisting of the families of Asteraceae, Brassicaceae, Poaceae, Solanaceae or Leguminosae treated with an ALS inhibitor or an agriculturally acceptable salt or derivative thereof.
